# EUROPEAN PATENT SPECIFICATION

(11) **EP 1 787 873 B1**
(45) Date of publication and mention of the grant of the patent: **16.06.2010**
(21) Application number: 06023737.7
(22) Date of filing: 15.11.2006
(51) Int. Cl.: B60R 21/09, B60T 7/06

(54) **Support structure for control pedal**
Tragwerk für ein Fahrzeugpedal
Structure de support pour une pédale de véhicule

(30) Priority: 17.11.2005 JP 2005333295; 17.11.2005 JP 2005333296; 17.11.2005 JP 2005333297; 17.11.2005 JP 2005333298; 17.11.2005 JP 2005333299
(43) Date of publication of application: 23.05.2007
(73) Proprietor: Mazda Motor Corporation, Aki-gun, Hiroshima, (JP); Auto Technica Corporation, Kaita-cho, Aki-gun Hiroshima, (JP)
(72) Inventor: Tokumo, Masayuki, Aki-gun, Hiroshima, (JP); Hiura, Tetsuo, Kaita-cho, Aki-gun, Hiroshima, (JP); Ishida, Hirofumi, Kaita-cho, Aki-gun, Hiroshima, (JP)
(74) Representative: Thoma, Michael

(56) References cited:
- EP-A- 0 659 615
- EP-A- 0 805 079
- WO-A-03/045750
- DE-A1- 10 056 526
- DE-A1- 19 606 427
- GB-A- 2 353 009

## Description

### BACKGROUND OF THE INVENTION

### 1. Field of the Invention

The present invention relates to a support structure for a control pedal which is pivoted relative to a dash panel of a vehicle and adapted to be swingably operated in frontward and rearward directions of a vehicle body.

### 2. Description of the Related Art

Heretofore, there has been known a control pedal support structure which includes a pedal bracket fixed to a dash panel, and a pedal body swingably supported relative to the pedal bracket through a support shaft supported by the pedal bracket, as disclosed in the following Patent Publication 1. This control pedal support structure is provided with a rotatable lever adapted to be brought into contact with a vehicle body-side member and thereby rotationally displaced, during a vehicle collision, so as to drivingly move the support shaft. Specifically, the support shaft is slidingly moved in a rearward direction of a vehicle body along a guide groove formed in the pedal bracket to cause a displacement of an upper portion of the pedal body in the rearward direction of the vehicle body about a position where a push rod for driving a brake booster is mounted to the upper portion of the pedal body, and correspondingly cause a displacement of a foot pad formed at a lower end of the pedal body in a frontward direction of the vehicle body.

The following Patent Publication 2 discloses a vehicle pedal support structure designed such that, during a vehicle collision, a rotation shaft serving as a pivotally supporting point, i.e., a pivot point, of a pedal body, is displaced in a rearward direction of a vehicle body relative to a foot pad formed at a lower end of the pedal body. Specifically, this vehicle pedal support structure comprises an initial-position keeping mechanism for keeping the rotation shaft at its initial position, and bias means for biasing the rotation shaft in the rearward direction of the vehicle body. The initial-position keeping mechanism includes a rotatable link holding the rotation shaft, and a fixed shaft supporting the rotatable link at a position spaced apart from the rotation shaft. The bias means is adapted to bias the rotatable link in a normal state in such a manner that the rotation shaft is kept at the initial position, and to bias the rotatable link during a vehicle collision in such a manner that the rotation shaft is displaced from the initial position in the rearward direction of the vehicle body to move the foot pad is moved in a frontward direction of the vehicle body.

The following Patent Publication 3 discloses a control pedal support structure designed such that, during a vehicle collision, a pedal bracket swingably supporting a pedal body of a control pedal is expandedly deformed, and correspondingly a support shaft serving as a pivot point of the pedal body is disengaged from the pedal bracket, to prevent a foot pad formed at a lower end of the pedal body from being moved in a rearward direction of a vehicle body even if a dash panel is moved rearward during the vehicle collision.
[Patent Publication 1] Pamphlet of International Patent Publication No. WO 03/045750 [Patent Publication 2] Japanese Patent No. 3269372
[Patent Publication 3] EP Patent(Patent Publication) No. 0659615

The control pedal support structures disclosed in the Patent Publications 1 and 2 are designed such that, during a vehicle collision, the rotation shaft mounted to an upper end of the pedal body to serve as a pivot point of the pedal body is displaced in the rearward direction of the vehicle body, and correspondingly the foot pad formed at the lower end of the pedal body is moved in a frontward direction of the vehicle body. This makes it possible to reduce a load to be imposed on a foot of a driver placed on the foot pad, i.e., reduce a load to be applied to the foot due to an inertia force causing a frontward movement of the driver in response to a front impact vehicle collision.

The control pedal support structure disclosed in the Patent Publication 1 is designed such that, in a normal state, the support shaft of the pedal body is supported by an arm portion of the rotatable lever, in such a manner as to be engaged with an upper end of the guide groove. Thus, if the rotatable lever wobbles, for example, due to an external force acting on the pedal body, the supported state of the pedal body will become unstable to cause a problem about deterioration in operational feeling of the pedal body. Moreover, a large external force acting on the rotatable lever is likely to cause a problem that the engagement state based on the arm portion is released, and the pedal body falls downward from the engagement position.

In the control pedal support structure designed such that, in the normal state, the rotation shaft of the pedal body is kept at the upper initial position based on a biasing force of the bias means, as disclosed in the Patent Publication 2, the rotation shaft can be stably kept at the initial position only if the biasing force of the bias means is set at an extremely high value. Thus, in reality, the support position of the rotation shaft is liable to be changed, for example, due to stretching and compression of the bias means, to cause a problem about difficulty in maintain a desirable operational feeling of the pedal body.

Further, in the control pedal support structure designed such that the pedal bracket is expandedly deformed in response to an impact load acting during a vehicle collision to allow the support shaft serving as a pivot point of the pedal body to be disengaged from the pedal bracket, as disclosed in the Patent Publication 3, the support shaft is stably supported in a normal state unless the pedal bracket is expandedly deformed, and therefore an operational feeling of the pedal body can be desirably maintained. However, in this control pedal support structure, during the course of expandedly deforming the pedal bracket in response to an impact load acting during a vehicle collision, if the pedal body supported by the pedal bracket is inclined, for example, due to a load acting thereon in an oblique direction, the pedal body is likely to get stuck with the pedal bracket. This situation inevitably causes a problem that the stuck state of the pedal body in the pedal bracket will be maintained, and a given load will be imposed on driver's foot.

### SUMMARY OF THE INVENTION

In view of the above problems, it is an object of the present invention to provide a control pedal support structure capable of maintaining a desirable operational feeling of a pedal body in a normal state, and effectively preventing a rearward movement of a foot pad during a vehicle collision in a simplified mechanism to reduce a load to be imposed on driver's foot.

According to a first aspect of the present invention, there is provided a support structure for a control pedal which is pivoted relative to a dash panel and adapted to be swingingly operated in frontward and rearward directions of a vehicle body. This support structure comprises a pedal bracket fixed to the dash panel to extend in the rearward direction of the vehicle body, and a pedal body swingably supported relative to the pedal bracket through a pedal pivot shaft mounted to the pedal bracket to extend in a lateral direction of the vehicle body. The pedal bracket is formed with a pedal-pivot-shaft mount hole zone for mounting thereon the pedal pivot shaft, and a pedal-pivot-shaft support zone located below the pedal-pivot-shaft mount hole zone and adapted to support the pedal pivot shaft from therebelow. The support structure includes dropping means adapted, during a vehicle collision, to deform the pedal-pivot-shaft support zone so as to allow the pedal pivot shaft to be dropped below the pedal-pivot-shaft mount hole zone.

According to the first aspect of the present invention, during normal vehicle running, i.e., in a normal state, the pedal pivot shaft can be stably mounted on the pedal-pivot-shaft mount hole zone of the pedal bracket, to obtain an advantage of maintaining a desirable operational feeling when the pedal body is swingingly operated about the pedal pivot shaft, while stably supporting the pedal body in a simplified mechanism. Further, in the event of a vehicle collision, the pedal pivot shaft is pushed downward by the dropping means to produce a deformation of the pedal-pivot-shaft support zone and other movements so as to drop the pedal pivot shaft below the pedal-pivot-shaft mount hole zone. Thus, even if a vehicle collision occurs in a state when a foot of a driver is placed on a foot pad formed at a lower end of the pedal body, the support structure can advantageously prevent an undesirable situation where a load is excessively imposed on the driver's foot due to a rearward movement of the foot pad in conjunction with the pedal body, in an effective manner.

According to a second aspect of the present invention, there is provided a support structure for a control pedal which is pivoted relative to a dash panel and adapted to be swingingly operated in frontward and rearward directions of a vehicle body. This support structure comprises a pedal bracket fixed to the dash panel to extend in the rearward direction of the vehicle body, and a pedal body swingably supported relative to the pedal bracket through a pedal pivot shaft mounted to the pedal bracket to extend in a lateral direction of the vehicle body. The pedal bracket is formed with a pedal-pivot-shaft mount hole zone for mounting thereon the pedal pivot shaft, and a pedal-pivot-shaft support zone adapted to support the pedal pivot shaft from therebelow. The pedal-pivot-shaft support zone includes a protruding portion located on at least either one of frontward and rearward sides of a lower peripheral edge of the pedal-pivot-shaft mount hole zone. The support structure includes dropping means adapted, during a vehicle collision, to deform the pedal-pivot-shaft support zone so as to allow the pedal pivot shaft to be dropped below the pedal-pivot-shaft mount hole zone. The support structure is designed such that, during the vehicle collision, the pedal body is disengaged from the pedal bracket just after the pedal pivot shaft is dropped downward from the pedal-pivot-shaft mount hole zone of the pedal bracket.

According to the second aspect of the present invention, during normal vehicle running, i.e., in a normal state, the pedal body can be stably supported in a simplified mechanism. Further, in the event of a vehicle collision, the pedal pivot shaft is pushed downward by the dropping means to produce a deformation of the protrusion portion constituting the pedal-pivot-shaft support zone and other movements so as to disengage the pedal body from the pedal bracket just after the pedal pivot shaft is dropped below the pedal-pivot-shaft mount hole zone, to release a restraint state of the pedal body relative to the pedal bracket. Thus, even if a vehicle collision occurs in a state when a foot of a driver is placed on a foot pad formed at a lower end of the pedal body, the support structure can advantageously prevent an undesirable situation where a load is excessively imposed on the driver's foot due to a rearward movement of the foot pad in conjunction with the pedal body, in an effective manner.

According to a third aspect of the present invention, there is provided a support structure for a control pedal which is pivoted relative to a dash panel and adapted to be swingingly operated in frontward and rearward directions of a vehicle body. This support structure comprises a pedal bracket fixed to the dash panel to extend in the rearward direction of the vehicle body, and a pedal body swingably supported relative to the pedal bracket through a pedal pivot shaft mounted to the pedal bracket to extend in a lateral direction of the vehicle body. The pedal bracket is formed with a pedal-pivot-shaft mount hole zone for mounting thereon the pedal pivot shaft, and a pedal-pivot-shaft support zone adapted to support the pedal pivot shaft from therebelow. The pedal-pivot-shaft support zone includes a protruding portion located on at least either one of frontward and rearward sides of a lower peripheral edge of the pedal-pivot-shaft mount hole zone. The support structure includes dropping means adapted, during a vehicle collision, to deform the pedal-pivot-shaft support zone so as to allow the pedal pivot shaft to be dropped below the pedal-pivot-shaft mount hole zone. The dropping means includes a rotatable lever swingably supported relative to the pedal bracket through a lever pivot shaft mounted to the pedal bracket to extend in the lateral direction of the vehicle body. The rotatable lever is adapted, during the vehicle collision, to be brought into interference with a vehicle body-side member and thereby rotationally displaced about the lever pivot shaft so as to push the pedal pivot shaft downward.

According to the third aspect of the present invention, during normal vehicle running, i.e., in a normal state, the pedal body can be stably supported in a simplified mechanism. Further, in the event of a vehicle collision, the pedal pivot shaft is pushed downward by the rotatable lever adapted to be rotationally displaced about the lever pivot shaft. Thus, the pedal pivot shaft can be effectively disengaged from the pedal-pivot-shaft mount hole zone in a simplified mechanism. In addition, even if a vehicle collision occurs in a state when a foot of a driver is placed on a foot pad formed at a lower end of the pedal body, the support structure can advantageously prevent an undesirable situation where a load is excessively imposed on the driver's foot due to a rearward movement of the foot pad in conjunction with the pedal body, in an effective manner.

These and other objects, features, and advantages of the present invention will become more apparent upon reading the following detailed description along with the accompanying drawings.

### BRIEF DESCRIPTION OF THE DRAWINGS

FIG. 1 is a side view showing a control pedal support structure according to a first embodiment of the present invention.
FIG. 2 is an exploded perspective view showing a specific mechanism of the control pedal support structure.
FIG. 3 is a side view showing a supported state of a pedal body of the control pedal support structure.
FIG. 4 is a front sectional view showing the specific mechanism of the control pedal support structure.
FIG. 5 is a side view showing the supported state of the pedal body in an initial stage of a vehicle collision.
FIG. 6 is a side view showing a state after a first pivot shaft is dropped in the control pedal support structure.
FIG. 7 is a front sectional view showing a state of the pedal body in a last stage of the vehicle collision.
FIG. 8 is a side view showing a state of the pedal body in the last stage of the vehicle collision.
FIG. 9 is an explanatory diagram showing a specific structure of a support zone for supporting a lower surface of the first pivot shaft.
FIG. 10 is an explanatory diagram showing an example of modification of the support zone for supporting a lower surface of the first pivot shaft.
FIG 11 is an explanatory diagram showing a control pedal support structure according to a second embodiment of the present invention.
FIG. 12 is a front sectional view showing the control pedal support structure according to the second embodiment.
FIG. 13 is an explanatory diagram showing a first-pivot-shaft support zone in a control pedal support structure according to a third embodiment of the present invention.
FIG. 14 is a side view showing a state of the control pedal support structure according to the third embodiment in an initial stage of a vehicle collision.
FIG. 15 is a side view showing a state of the control pedal support structure according to the third embodiment in a last stage of the vehicle collision.
FIG. 16 is an exploded perspective view showing a control pedal support structure according to a fourth embodiment of the present invention.
FIG. 17 is a front sectional view showing the control pedal support structure according to the fourth embodiment.
FIG. 18 is a side view showing a state of the control pedal support structure according to the fourth embodiment in an initial stage of a vehicle collision.
FIG. 19 is a side view showing a state of the control pedal support structure according to the fourth embodiment in an intermediate stage of the vehicle collision.
FIG. 20 is a side view showing a state of the control pedal support structure according to the fourth embodiment in a last stage of the vehicle collision.
FIG. 21 is a side view showing a control pedal support structure according to a fifth embodiment of the present invention.
FIG 22 is a side view showing a state of the control pedal support structure according to the fifth embodiment in an initial stage of a vehicle collision.
FIG. 23 is a side view showing a state of the control pedal support structure according to the fifth embodiment in a last stage of the vehicle collision.
FIG. 24 is a side view showing a control pedal support structure according to a sixth embodiment of the present invention.
FIG. 25 is a side view showing a state of the control pedal support structure according to the sixth embodiment in an initial stage of a vehicle collision.
FIG. 26 is a side view showing a state of the control pedal support structure according to the sixth embodiment in a last stage of the vehicle collision.
FIG. 27 is a side view showing a control pedal support structure according to a seventh embodiment of the present invention.
FIG. 28 is a side view showing a state of the control pedal support structure according to the seventh embodiment during a vehicle collision.
FIG. 29 is a side view showing a control pedal support structure according to an eighth embodiment of the present invention.
FIG. 30 is a side view showing a state of the control pedal support structure according to the eighth embodiment in an initial stage of a vehicle collision.
FIG. 31 is a side view showing a state of the control pedal support structure according to the eighth embodiment in a last stage of the vehicle collision.

### DETAILED DESCRIPTION OF THE PREFERRED EMBODIMENTS OF THE INVENTION

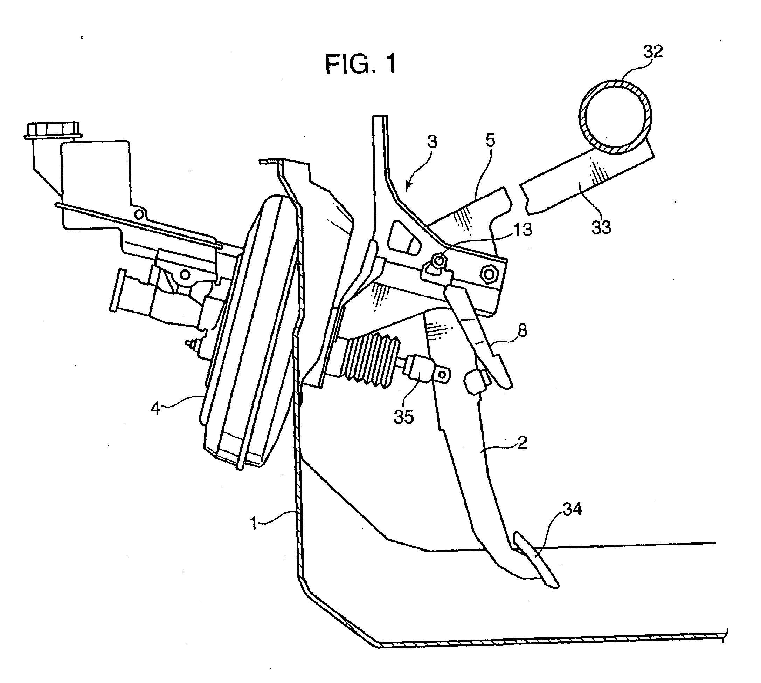

FIG. 1 shows a control pedal support structure according to a first embodiment of the present invention. In FIG. 1, the reference numeral 1 indicates a dash panel partitioning between an engine compartment and a passenger compartment. The dash panel 1 is provided with a pedal bracket 3 and a brake booster 4 each fixedly attached thereto. The pedal bracket 3 swingably supports a pedal body 2 constituting a control pedal, such as a brake pedal. The pedal bracket 3 is provided with a rotatable lever 5 which is pivoted thereon and adapted to be moved during a vehicle collision in such a manner as to allow a pivot point of the pedal body 2 to be moved downward.

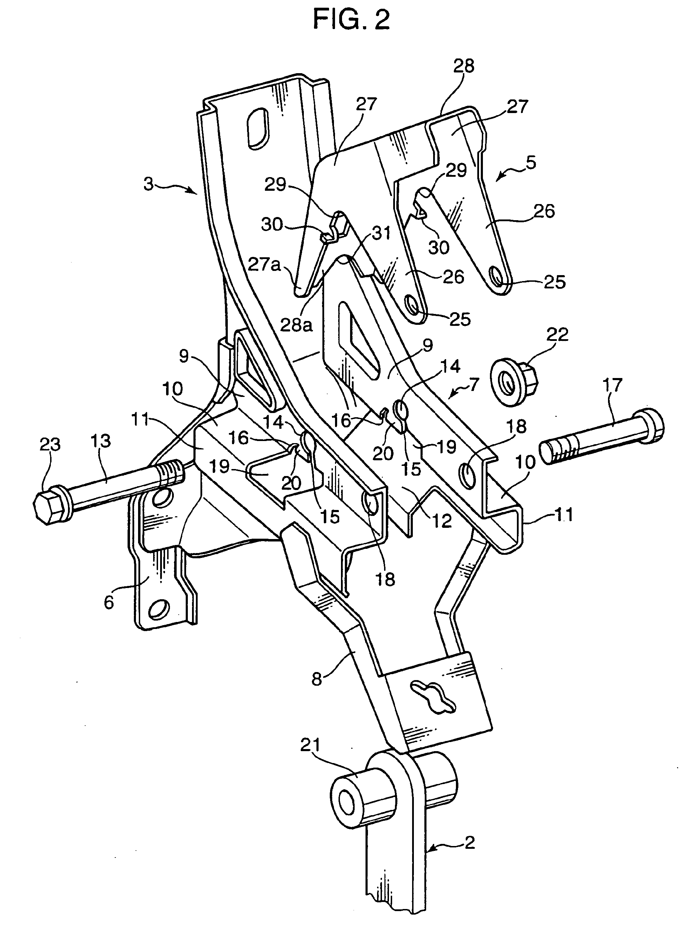

As shown in FIGS. 2 to 4, the pedal bracket 3 has an anchor plate 6 bolted to the dash panel 1, and a pair of right and left bracket bodies 7 extending, respectively, from laterally opposite edges of the anchor plate 6 in a rearward direction of a vehicle body. Each of the bracket bodies 7 has a rearward end onto which a mounting bracket 8 for mounting thereto a brake sensor (not shown) adapted to detect an operation of the pedal body 2 is fixed to extend downward. In a bilaterally symmetric manner, each of the bracket bodies 7 of the pedal bracket 3 integrally has a vertical plate 9 standing vertically and extending from a corresponding one of the laterally opposite edges of the anchor plate 6 in the rearward direction of the vehicle body, a horizontal plate 10 extending horizontal and laterally outward from a lower edge of the vertical plate 9, an outer plate 11 extending downward from an outward edge of the horizontal plate 10, and an inclined plate 12 extending laterally inward and obliquely upward from a lower edge of the outer plate 11 with a given distance from the lower edge of the vertical plate 9.

Each of the vertical plates 9 of the bracket body 7 has a mount hole 14 for supporting a first pivot shaft (pedal pivot shaft) 13 serving as the pivot point of the pedal body 7, and an inclined groove 15 extending obliquely rearward from a lower peripheral edge of the mount hole 14. Further, the vertical plate 9 has a cutout 16 formed on a frontward side relative to the inclined groove 15 to extend obliquely toward the mount hole 14, and a mount hole 18 formed on a rearward side relative to the mount hole 14 to support a second pivot shaft (lever pivot shaft) 17 serving as a pivot point of the rotatable lever 5. The mount holes 14 make up a mount hole zone for the first pivot shaft 13, and the mount holes 18 make up a mount hole zone for the second pivot shaft 13. Further, the inclined grooves 15 make up a guide zone.

In each of the right and left bracket bodies 7, a longitudinally central region of a lower portion of the vertical plate 9, a longitudinally central region of the horizontal plate 10 and a longitudinally central region of an upper portion of the outer plate 11 are cut out over a given range to form an approximately rectangular-shaped opening 19 continuing from respective lower ends of the inclined groove 15 and the cutout 16 each formed in the vertical plate 9 of the bracket body 7. The openings 19 in the right and left bracket bodies provide an opening zone. Accordingly, an approximately trapezoidal-shaped support portion 20 is formed in each of the right and left vertical plates 9 by the opening 19, the inclined groove 15 and the cutout 16. Specifically, the support portion 20 is located above an upper edge of the opening 19 and formed as a protruding portion which protrudes from a frontward side toward a rearward side of a lower portion of the first pivot shaft 13 to support the first pivot shaft 13 from therebelow so as to inhibit a downward movement of the first pivot shaft 13 during normal vehicle running, i.e., in a normal state. Further, the support portion 20 is designed to be deformed according to a rotational displacement of the rotatable lever 5 during a vehicle collision so as to permit the first pivot shaft 13 to be dropped below the mount hole 14, as described in detail later. The support portions 20 make up a support zone for the first pivot shaft 13.

The first pivot shaft 13 is provided with a fastener segment at laterally opposite ends thereof, and mounted to the pedal bracket 3 by bringing the fastener segment into press contact with a periphery of the mount hole zone 14 formed in the vertical plates 9 of the pedal bracket 3. More specifically, the first pivot shaft 13 has a shank, and the fastener segment consisting of a bolt head 23 integrally formed at one end of the first pivot shaft 13 and a nut 22 adapted to be screwed on the other end of the first pivot shaft 13. The shank of the first pivot shaft 13 is inserted into the mount holes 14 of the bracket bodies 7 and an insertion hole formed in a boss 21 of the pedal body 21, and then the nut 22 is screwed on the other end of the first pivot shaft 13. In this manner, the two fastener elements, i.e., the bolt head 23 and the nut 22, are brought into press contact with the respective peripheries of the mount holes 14 to mount the first pivot shaft 13 to the pedal bracket 3 in such a manner as to extend in a lateral direction of the vehicle body, while allowing the pedal body 2 to be supported relative to the pedal bracket 3 in a swingable manner about the first pivot shaft 13.

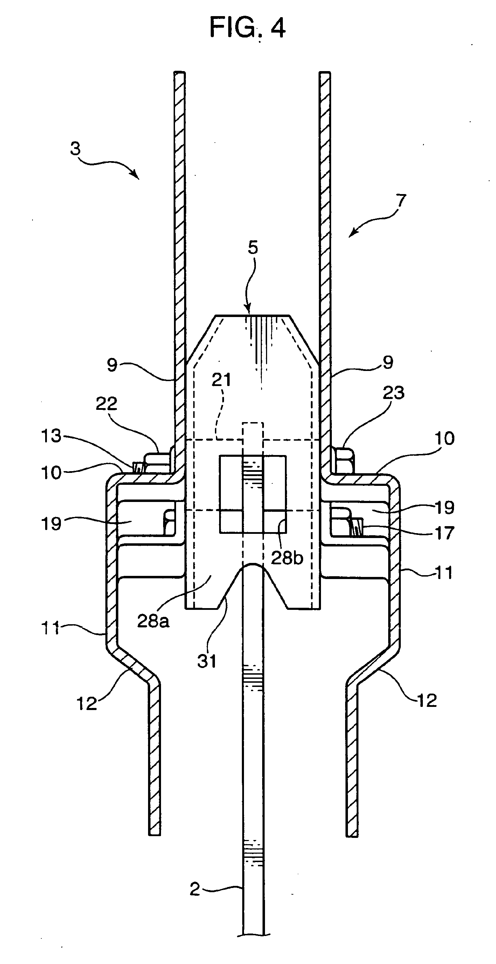

The rotatable lever 5 has a pair of right and left legs 26 each formed with an insertion hole 25 for the second pivot shaft 17 at a lower end thereof, a pair of right and left sidewall plates 27 each extending upward from an upper edge of a corresponding one of the legs 26, and a top plate 28 connecting between respective upper edges of the right and left sidewall plates 27. The top plate 28 has an extension portion 28a extending obliquely downward in the frontward direction of the vehicle body relative to the legs 26, and each of the sidewall plates 27 also extends along a corresponding one of laterally opposite edges of the extension portion 28a. A connection region between respective lower edges of each of the legs 26 and a corresponding one of the sidewall plates 27 is formed as an arc-shaped corner 29. Further, the rotatable lever 5 has a deformation suppression segment consisting of a pair of reinforcing portions 30 each protruding from a corresponding one of the sidewall plates 27 at a position adjacent to a frontward end of the arc-shaped corner 29. Each of the reinforcing portions 30 is adapted to be inserted into a corresponding one of the cutouts 16 of the pedal bracket 3 in the normal state so as to reinforce the support portion 20 to restrict a deformation of the support portion 20. As shown in FIG. 4, a notch 31 is formed in a laterally central region of a frontward edge of the extension portion 28a. The notch 31 has a reverse taper shape, i.e., has a lateral width which is gradually narrowed in the rearward direction of the vehicle body. The rotatable lever 5 is mounted in such a manner that the notch 31 is disposed in opposed relation to the pedal body 2.

A shank of the second pivot shaft 17 is inserted into the respective mount holes 18 of the bracket bodies 7 and the insertion holes 25 of the rotatable lever 5, and then a nut is screwed on one end of the second pivot shaft 17, so as to mount the second pivot shaft 17 to the pedal bracket to extend in the lateral direction of the vehicle body, while allowing the rotatable lever 5 to be supported relative to the pedal bracket 3 in a swingable manner about second pivot shaft 17. The rotatable lever 5 is mounted in such a manner that each of the reinforcing portions 30 is inserted into a corresponding one of the cutouts 16 of the pedal bracket 3, and each of the corners 29 is disposed in opposed relation to an upper surface of the first pivot shaft 13 with a given distance therebetween. In this state, the extension portion 28a of the top plate 28 extending in the frontward direction of the vehicle body relative to a first-pivot-shaft mounting site (where the first pivot shaft 13 is mounted to the pedal body 2) is disposed in opposed relation to a frontward surface of the pedal body 2 with a given distance therebetween.

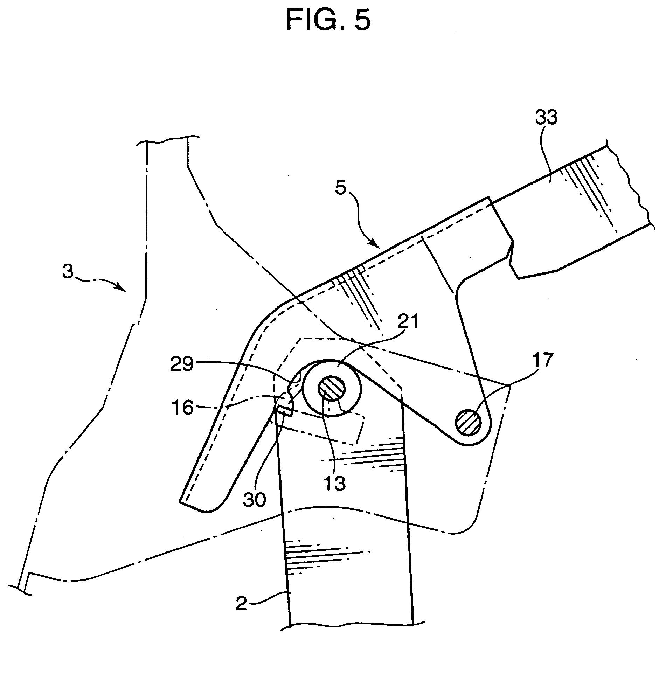

As shown in FIG. 1, an instrument panel reinforcement 32 formed of a pipe member and used as a steering column support is disposed on a rearward side relative to the rotatable lever 5 with a given distance therebetween, and a vehicle body-side member 33 is fixed to the instrument panel reinforcement 32 in such a manner that a frontward end thereof is disposed in opposed relation to a rearward end of the rotatable lever 5 with a given distance therebetween. Thus, when the dash panel 1 and the pedal bracket 3 is moved rearward during a front impact vehicle collision, and the rearward end of the rotatable lever 5 mounted to the pedal bracket 3 comes into contact with the frontward end of the vehicle body-side member 33, the rotatable lever 5 is rotationally displaced about the second pivot shaft 17 in a direction for moving the frontward end thereof downward, as shown in FIG. 5. Thus, the reinforcing portions 30 are disengaged from the respective cutouts 16 of the pedal bracket 3, and then the corners 29 of the rotatable lever 5 are brought into contact with the boss 21 holding the first pivot shaft 13 to push the first pivot shaft 13 downward.

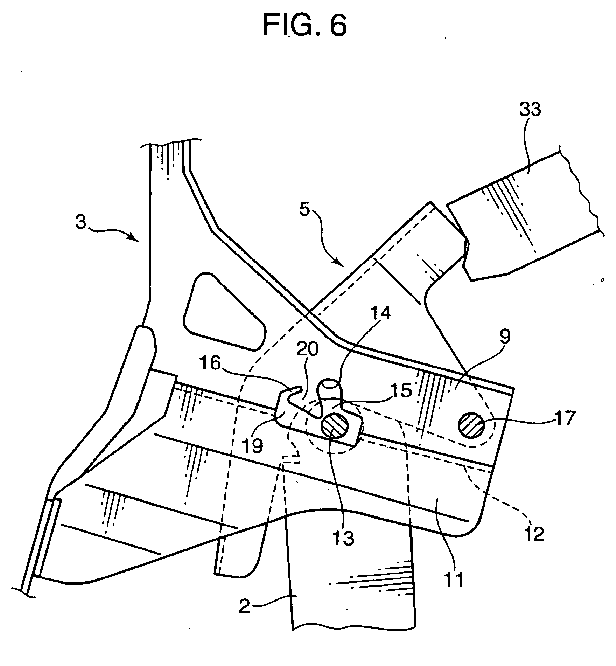

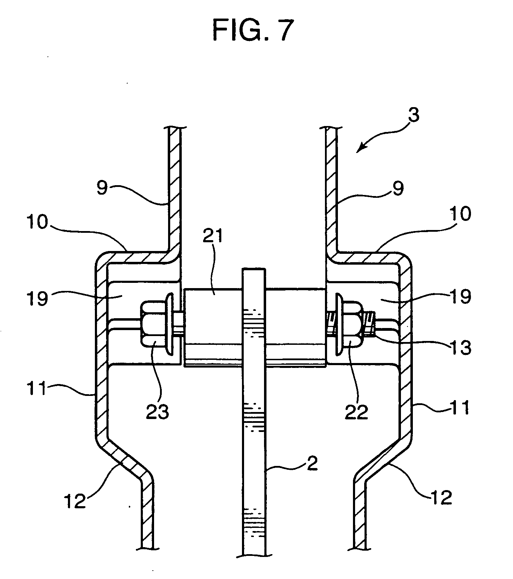

As shown in FIG. 6, when the pedal bracket 3 is further moved rearward according to an impact load of the vehicle collision, each of the support portions 20 of the pedal bracket 3 is plastically deformed while being pushed downward about the cutout 16, and thereby each of the inclined grooves 15 are widened or expanded. Thus, a supported state of the first pivot shaft 13 relative to the support portions 20 is released to allow the first pivot shaft 13 to be slidingly displaced along the guide zone consisting of the expanded inclined grooves 15 and moved into the openings 19 located below the mount holes 14, i.e., dropped from the mount holes 14. Just after the dropping of the first pivot shaft 13, as shown in FIG. 7, the fastener segment of the first pivot shaft 13 consisting of the bolt head 23 and the nut 22 is introduced into a space between the right and left outer plates 11 through the respective openings 19, and correspondingly the pedal body 2 is disengaged from the pedal bracket 3.

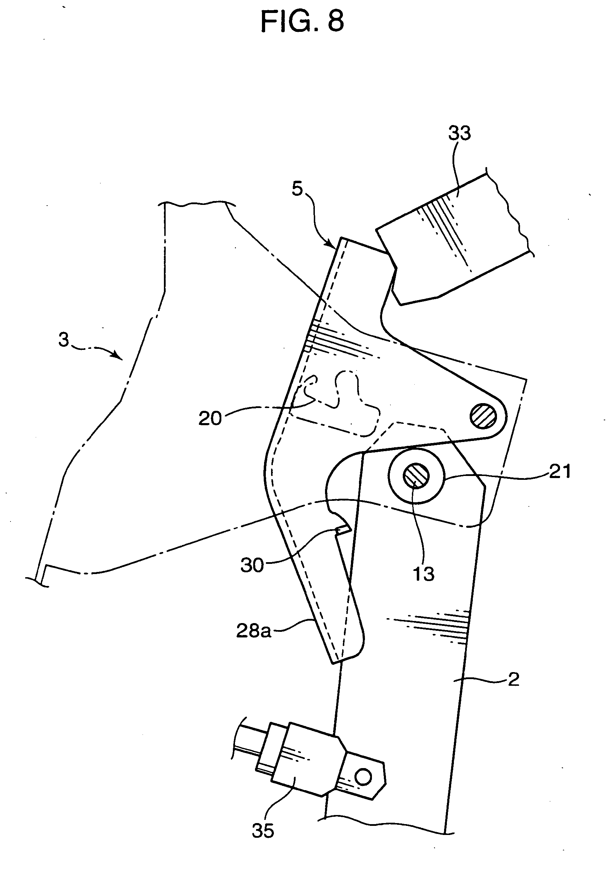

As shown in FIG. 8, after the first pivot shaft 13 is dropped downward, the frontward portion (extension portion 28a) of the top plate 28 of the rotatable lever 5 is brought into contact with a frontward surface of an upper portion of the pedal body 2. Thus, the upper portion of the pedal body 2 is pushed in the rearward direction of the vehicle body, and the pedal body 2 is rotationally displaced about a push-rod mounting site where a push rod 35 for driving the brake booster 4. That is, the extension portion 28a, i.e., the frontward portion of the top plate 28, makes up push means adapted, during a vehicle collision, to be brought into contact with a frontward surface of the pedal body 2 at a position below the first pivot shaft 13 dropped downward from the support portions 20 of the pedal bracket 3, so as to push the first pivot shaft 13 and the upper portion of the pedal body 2 in the rearward direction of the vehicle body.

As above, the control pedal support structure according to the first embodiment comprises the pedal bracket 3 fixed to the dash panel 1 to extend in the rearward direction of the vehicle body, and the pedal body 2 swingably supported relative to the pedal bracket 3 through the first pivot shaft 13 (i.e., pedal pivot shaft) mounted to the pedal bracket 3 to extend in the lateral direction of the vehicle body. The pedal bracket 3 is formed with the mount hole zone 14 for supporting the first pivot shaft 13 (i.e., pedal pivot shaft), and the support zone 20 located below the mount hole zone 14 and adapted to support the first pivot shaft 13 from therebelow. Thus, during normal vehicle running, the support zone 20 allows the first pivot shaft 13 to be stably supported by the mount hole zone 14 of the pedal bracket 3. This makes it possible to maintain a desirable operational feeling when the pedal body 2 is swingingly operated about the first pivot shaft 13. In addition, even if the pedal body 2 is applied with a large external force, for example, urging a downward movement thereof, a stable supported state of the pedal body 2 can be advantageously obtained in a simplified mechanism without occurrence of an undesirable situation where the first pivot shaft (pedal pivot shaft) 13 is dropped from the mount hole zone, as long as the support zone 20 are deformed.

In the event of a vehicle collision, the rotatable lever 5 and the vehicle body-side member 33 which serve as dropping means can push the first pivot shaft 13 downward to cause deformations of the support zone 20 so as to allow the first pivot shaft 13 to be dropped below the mount hole zone 14. This provides an advantage of being able to effectively reduce a load to be imposed on driver's foot placed on a foot pad 34 of the pedal body 2 during the vehicle collision.

More specifically, in the first embodiment, when the dash panel 1 is moved rearward due to occurrence of a vehicle collision, such as a front impact vehicle collision, the frontward end of the vehicle body-side member 33 is brought into contact with the rearward end of the rotatable lever 5 to rotationally displace the rotatable lever 5 about the second pivot shaft 17 so as to apply a pushing force causing a downward displacement to the first pivot shaft 13 and deform the support zone 20 according to the pushing force. This makes it possible to release the supported state of the first pivot shaft 13 relative to the support zone 20 in the event of a vehicle collision, so as to allow the first pivot shaft 13 to be dropped below the mount hole zone 14. Thus, even if a vehicle collision occurs in a state when driver's foot is placed on the foot pad 34, the support structure can advantageously prevent an undesirable situation where a load is excessively imposed on the driver's foot due to a rearward movement of the foot pad 34 in conjunction with the pedal body 2, in an effective manner.

While it is contemplated to omit the rotatable lever 5 and bring dropping means consisting only of the vehicle body-side member 33 fixed to the instrument panel reinforcement 32, into direct contact with an upper surface of the first pivot shaft 13 or the pedal body 2, so as to apply a pushing force causing a downward displacement to the first pivot shaft 13 and deform the support zone 20 according to the pushing force, the above support structure designed to move the first pivot shaft 13 based on the dropping means comprising the rotatable lever 5 so as to allow the first pivot shaft 13 to be dropped below the mount hole zone 14 can more effectively disengage the first pivot shaft 13 from the mount hole zone 14 in a simplified mechanism.

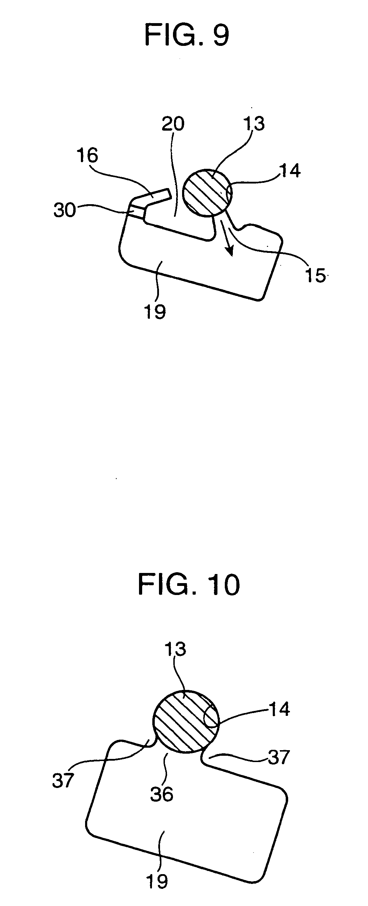

As shown in FIG. 9, in this first embodiment, each of the support portions 20 is formed as a protruding portion protruding from a frontward side toward a rearward side of a lower peripheral edge of the mount hole 14 relative to an axis of the first pivot shaft 13, so that, in the event of a vehicle collision, the support zone 20 is plastically deformed about a base end (frontward end) thereof, and the first pivot shaft 13 is dropped downward from the mount hole zone 14 through the guide zone located on the rearward side of the support zone 20. In this case, a direction for pushing and moving the first pivot shaft 3 by the rotatable lever 5 (see the arrow in FIG. 9) can be aligned with a direction for dropping the first pivot shaft 13, to obtain an advantage of facilitating dropping the first pivot shaft 3 from the mount hole zone 14 during the vehicle collision.

Alternatively, the support portions 20 each comprising the protruding portion protruding from a frontward side toward a rearward side of the lower peripheral edge of the mount hole 14 may be configured by forming an inclined groove 15 in such a manner as to provide communicate between the mount hole 14 and a frontward region of the opening 19 located below the mount hole 14, and forming a cutout 16 on a rearward side relative to the inclined groove 15, so that, in the event of a vehicle collision, the support zone 20 is plastically deformed about a base end (rearward end) thereof, and the first pivot shaft 13 is dropped downward from the mount hole zone 14, as described in detail later. Further, each of the support portions 20 for supporting the first pivot shaft 13 may be formed as a protruding portion protruding from one side (frontward or rearward side) toward the other side (rearward or frontward side) of a lower peripheral edge of the mount hole 14 mounting thereon the first pivot shaft 13, relative to the axis of the first pivot shaft 13, so as to define approximately the entire upper edge of the opening 19 formed below the mount hole 14. In this case, the supported state of the first pivot shaft 13 during normal vehicle running can be effectively stabilized in a simplified mechanism to obtain an advantage of maintaining a desirable operational feeling of the pedal body 2.

In the first embodiment, the base end of the protruding portion 20 constituting the support zone 20 for the first pivot shat 13 is formed with the cutout 16 extending obliquely toward the mount hole 14 to facilitate a plastic deformation of the protruding portion. Thus, in the event of a vehicle collision, the support zone 20 can be plastically deformed in an effective manner to facilitate dropping of the first pivot shat 13 from the mount hole zone 14.

Particularly, in the first embodiment, a deformation suppression segment consisting of the reinforcing portions 30 protrudingly formed in the rotatable lever 5 is disengageably inserted into the cutouts 16 of the pedal bracket 3 to suppress a deformation of the support zone 20. This makes it possible to prevent a plastic deformation of the support zone 20 in the normal state so as to stably support the first pivot shaft 13. Further, in the event of a vehicle collision, the reinforcing portions 30 can be disengaged from the corresponding cutouts 16 to facilitate a plastic deformation of the support zone 20 so as to allow the first pivot shaft 13 to be reliably dropped from the support zone 20.

While the deformation suppression segment adapted to be detachably inserted into the cutouts 16 may be provided separately from the rotatable lever 5, the deformation suppression segment consisting of the reinforcing portions 30 protrudingly formed in the rotatably lever 5 in such a manner that they can be disengageably inserted into the respective cutouts 16 of the pedal bracket 3, as in the first embodiment, can provide an advantage of simplifying a mechanism for suppressing a deformation of the support zone 20 by the reinforcing portions 30 in the normal state and disengaging the reinforcing portions 30 from the cutouts 16 during a vehicle collision to facilitate a plastic deformation of the support zone 20.

In the first embodiment, the support structure is designed such that, during a vehicle collision, the reinforcing portions 30 are separated from the support zone 20 according to the rotational displacement of the rotatable lever 5, before the first pivot shaft 13 is pushed downward through the rotatable lever 5. Thus, in the normal state, the support zone 20 can be reinforced by the reinforcing portions to prevent a deformation of the support zone 20. Further, in the event of a vehicle collision, after the reinforcing portions 30 are moved out of the cutouts 16 and separated from the support zone 20, a plastic deformation of the support zone 20 can be facilitated to allow the first pivot shaft 13 to be readily dropped from the support zone 20. Therefore, during normal vehicle running, the first pivot shaft 13 can be kept in a stable supported state to maintain a desirable operational feeling when the pedal body 2 is swingingly operated about the first pivot shaft 13. In addition, as compared with a support structure without the cutouts 16, a plastic deformation of the support zone 20 can be facilitated to allow the first pivot shaft 13 to be readily dropped from the support zone 20.

FIG. 10 shows an example of modification of the support structure according to the first embodiment. As shown in FIG. 10, in each of the right and left vertical plates 9, a pair of protruding portions 37 are formed, respectively, on frontward and rearward sides of a lower peripheral edge of the mount hole 14 mounting thereon the first pivot shaft 13, in opposed relation to each other. In the normal state, a downward movement of the first pivot shaft 13 is restricted by the support portion consisting of the protruding portions 37. In the event of a vehicle collision, the protruding portions 37 are plastically or elastically deformed to allow the first pivot shaft 13 to be dropped below the mount hole 14. In this modification, the first pivot shaft 13 can be kept in a stable supported state during normal vehicle running while simplifying a structure of the pedal bracket 3, and a plastic deformation of the support zone comprising the protruding portions 37 can be readily produced to allow the first pivot shaft 13 to be readily dropped from the support zone.

The support structure in the above modification is designed such that, just after the dropping of the first pivot shaft 13 during the vehicle collision, the fastener segment of the first pivot shaft 13 is introduced into a space between the right and outer plates 11 through the opening zone 19 located below the mount hole zone 14 so as to allow the first pivot shaft 13 to be disengaged from the pedal bracket 3. In this manner, a restraint state of the pedal body 2 relative to the pedal bracket 3 is released. Thus, even if a vehicle collision occurs in a state when driver's foot is placed on the foot pad 34 formed at the lower end of the pedal body 3, this support structure can advantageously prevent an undesirable situation where an excessive load is imposed on the driver's foot due to a rearward movement of the foot pad 34 in conjunction with the pedal body 2, in an effective manner.

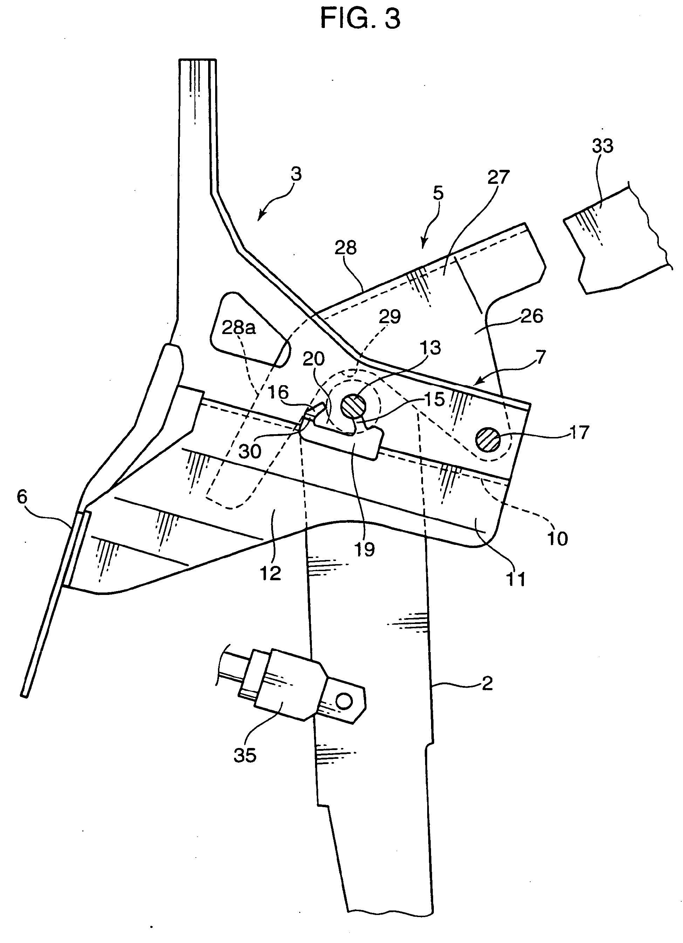

As shown, for example, in FIGS. 3 and 4, in the first embodiment, the guide zone consisting of the inclined grooves 15 for guiding the first pivot shaft 13 downward formed in a layout region of the support zone formed in the pedal bracket 3, and the fastener segment (the nut 22 and the bolt head 23) of the first pivot shaft 13 is brought into contact with the support zone 20 (specifically, a periphery of the mount hole zone 14) located above the guide zone, in the lateral direction, so as to allow the first pivot shaft (i.e., pedal pivot shaft) 13 to be fastened to the pedal bracket 3. Thus, the first pivot shaft 13 can be stably supported in the normal state by the pedal bracket 3, and the first pivot shaft 13 disengaged from the support zone during a vehicle collision can be moved downward along the vertical plates 9. This provides an advantage of being able to effectively prevent the first pivot shaft 13 from getting stuck with the pedal bracket 3.

Further, as in the first embodiment, the pair of right and left support portions 20 each supporting a corresponding one of laterally opposite ends of the first support shaft (i.e., pedal support shaft) 13 are formed, respectively, in the pair of right and left vertical plates 9 constituting the pedal bracket 3, and the fastener segment comprises the two fastener elements (the nut 22 and the bolt head 23). The fastener elements are brought into press contact, respectively, with the support portions 20 in the lateral direction, so as to allow the laterally opposite ends of the first pivot shaft 13 to be fastened to the pedal bracket 3. In this case, the first pivot shaft 13 can be stably supported in the normal state by the pedal bracket 3, and the first pivot shaft 13 disengaged from the support portions during a vehicle collision can be moved downward along the vertical plates 9. This provides an advantage of being able to effectively prevent the first pivot shaft 13 from getting stuck with the pedal bracket 3.

Particularly, in the first embodiment, the pair of right and left outer plates 11 are disposed below the support zone for the first pivot shaft 13, i.e., below the respective vertical plates 9 having the mount hole zone 14. Thus, when the fastener segment of the first pivot shaft 13 dropped downward from the support zone of the pedal bracket 3 is introduced into the space between the outer plates 11, a lateral displacement of the first pivot shaft 13 can be restricted to a given value or less by a lateral-displacement restriction segment consisting of the outer plates 11. This makes it possible to further effectively prevent the first pivot shaft 13 from having a largely lateral displacement just after being disengaged from the mount hole zone 14 and getting stuck with the pedal bracket 3.

In place of the lateral-displacement restriction segment in the first embodiment which is comprised of the pair of right and left outer plates 11 constituting the bracket body 7 and having the mount hole zone 14 for the first pivot shaft 13, and adapted to restrict a lateral displacement of the first pivot shaft 13 dropped from the support zone, the lateral-displacement restriction segment may be composed of a lateral-displacement restriction member prepared separately from the bracket body 7 and adapted to restrict a lateral displacement of the first pivot shaft 13. However, the lateral-displacement restriction segment comprised of the pair of right and left outer plates 11 constituting the bracket body 7 as in the first embodiment can provide an advantage of being able to prevent an excessive lateral displacement of the first pivot shaft 13 disengaged from the mount hole zone 14, readily and effectively.

In the first embodiment, each of the bracket bodies 7 of the pedal bracket 3 comprises the vertical plate 9 formed with the mount hole 14 for mounting thereon the first pivot shaft 13, the horizontal plate 10 extending laterally outward from the lower edge of the vertical plate 9, and the outer plate 11 extending downward from the outer edge of the horizontal plate 10. Based on this the pedal bracket 3, the lateral-displacement restriction segment for restricting a lateral displacement of the first pivot shaft 13 is made up of the pair of outer plates 11. This makes it possible to increase a sectional area of the bracket body 7 to effectively provide higher rigidity to the bracket body 7. Thus, the supported state of the pedal body 2 can be stabilized in the normal state to obtain an advantage of being able to maintain a desirable operational feeling when the pedal body 2 is swingingly operated about the first pivot shaft 13.

Further, in the first embodiment, in addition to the outer plates 11, the lateral-displacement restriction segment for restricting a lateral movement of the first pivot shaft 13 includes the pair of right and left inclined plates 12 extending laterally inward and obliquely upward from a lower edge of the outer plate 11, in such a manner that an allowable range of a lateral displacement of the first pivot shaft 13 dropped from the support zone of the pedal bracket 3 is gradually narrowed as the dropped first pivot shaft 13 is moved downward. Thus, even if the pedal body 2 temporality has a large lateral displacement just after the restraint state of the pedal body 2 relative to the pedal bracket 3 is released, the lateral displacement of the pedal body 2 can be gradually corrected. This provides an advantage of being able to effectively prevent the pedal body 2 from having a largely lateral displacement just after being released from the restraint state and getting stuck with a component of the vehicle body or the like.

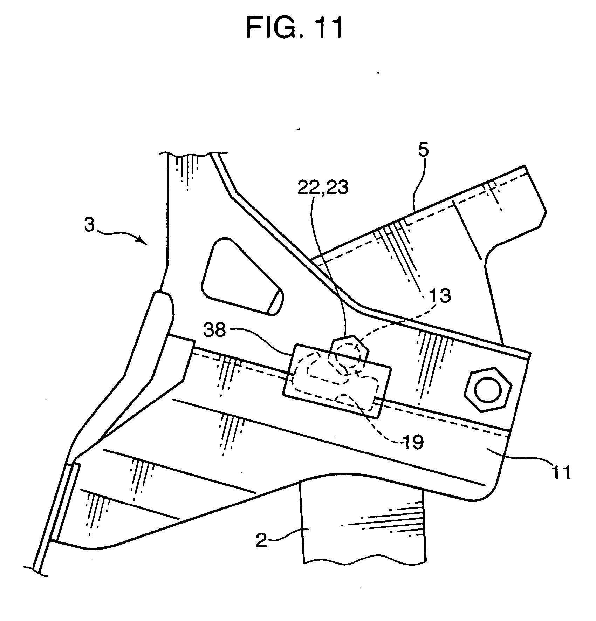

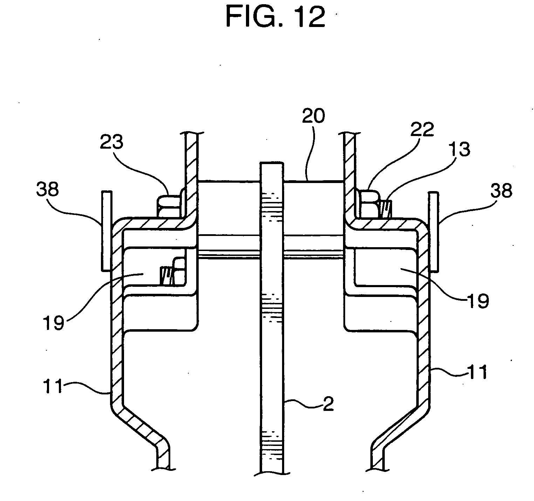

FIGS. 11 and 12 show a control pedal support structure according to a second embodiment of the present invention. Except that the pedal bracket 3 is provided with an interference restriction segment consisting of a pair of right and left cover plates 38 each fixed to a corresponding one of the outer plates 11 to extend upward from an upper edge of the outer plates 11 and adapted to restrict the fastener segment (the nut 22 and the bolt head 23) of the first pivot shaft 13 from interfering with a periphery of the opening zone 19 formed in the pedal bracket 3 to allow the fastener segment to pass therethrough, when the first pivot shaft 13 is dropped downward from the support zone, the control pedal support structure according to the second embodiment has the same structure as that in the first embodiment. The interference restriction segment consisting of the cover plates 38 can prevent the first pivot shaft 13 from being laterally displaced just after the first pivot shaft 13 is dropped below the support zone, so as to reliably prevent the fastener segment from getting stuck with the pedal bracket 3.

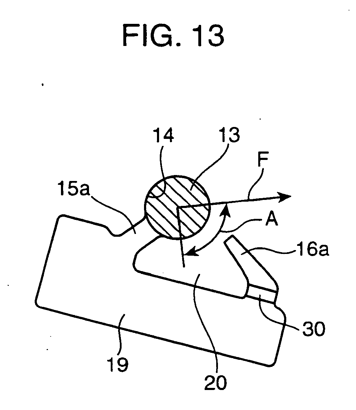

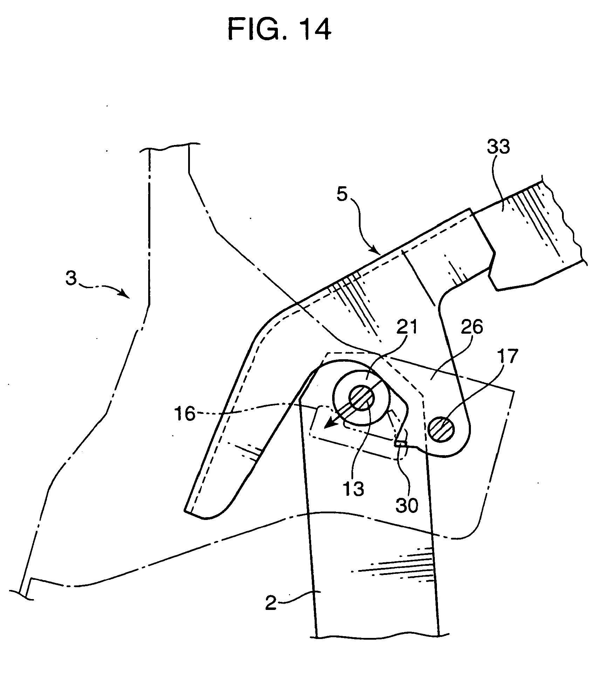

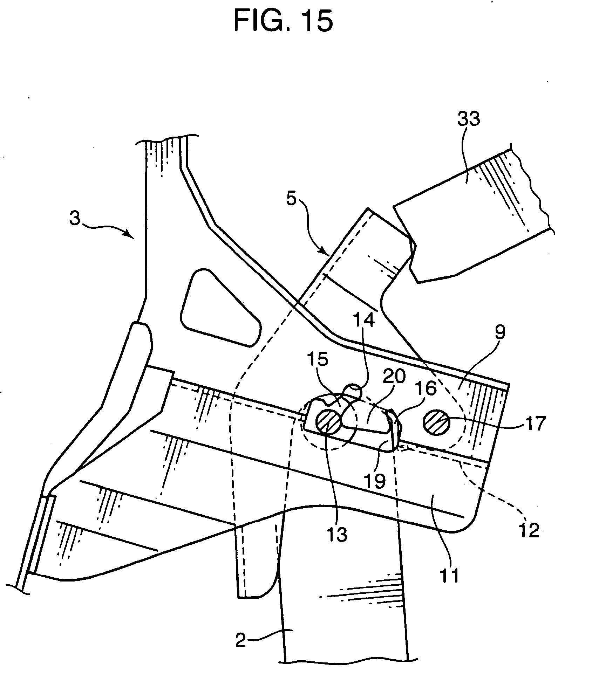

FIGS. 13 to 15 show a control pedal support structure according to a third embodiment of the present invention. In the same structure as that in the first embodiment where the first pivot shaft 13 (i.e., pedal pivot shaft) is located above the push rod 35 mounted on the pedal body 2, and adapted, in response to a driver's pressing operation of the foot pad 34, to apply an actuation force from the push rod 35 to the brake booster 4 in the frontward direction and apply a pressing force F from the first pivot shaft 35 to the support zone of the pedal bracket 3 in the rearward direction, the pedal bracket 3 in the control pedal support structure according to the third embodiment is formed with a dropping facilitation zone adapted, during a vehicle collision, to facilitate the downward dropping of the first pivot shaft according to the rotational displacement of the rotatable lever. The dropping facilitation zone comprises an inclined groove 15a located on a frontward side relative to an axis of the first pivot shaft 13. Further, the support zone (specifically, a peripheral edge of the mount hole zone) of the pedal bracket 3 mounting thereon the first pivot shaft 13 is formed to be in contact with the first pivot shaft 13 over an angular range A of about 90 degrees as measured downward from a line of the pressing force F applied from the first pivot shaft 13 to the pedal bracket 3. Thus, the control pedal support structure according to the third embodiment makes it possible to apply a sufficient reaction force against the pedal pressing force to the pedal body 2 through the first pivot shaft 13 and effectively support the weight of the pedal body 2 so as to obtain an advantage of adequately ensuring a supporting rigidity for the pedal body 2 to reliably maintain a desirable operational feeling of the pedal body 2.

That is, in the third embodiment, the dropping facilitation zone comprising the inclined groove 15a adapted to facilitate the dropping of the first pivot shaft 13 is formed to extend obliquely frontward from the lower peripheral edge of the mount hole zone, and the rotatable lever 5 is designed to push the first pivot shaft 13 in a direction approximately identical to the extension direction of the inclined groove 15a according to a rotational displacement of the rotatable lever 5 during a vehicle collision, so as to plastically deform the support zone 20 supporting the first pivot shaft 13 from therebelow, about a base end (rearward end) of the support zone 20 to allow the first pivot shaft 13 to be dropped downward from the mount hole zone. If the inclined groove is formed on a rearward side relative to the support zone 20 in such a case where an inclined groove communicating with the mount hole zone is formed on a rearward side of the support zone to be applied with a reactive force during an swing operation of the pedal body 2, the supported state of the first pivot shaft 13 is likely to become unstable in the normal state to cause deterioration in operational feeling of the pedal body 2. The control pedal support structure according to the third embodiment can effectively prevent the above disadvantage.

While the dropping facilitation zone comprising the inclined groove 15a in the third embodiment is formed to extend obliquely and approximately linearly, the dropping facilitation zone comprising the inclined groove 15a may be formed to extend in an arc shape having a center defined by the second pivot shaft 12 serving as a pivot point of the rotatable lever 5 to allow the dropping facilitation zone to further accurately conform to a turning direction of the first pivot shaft 13 pushed by the rotatable lever 5 during the vehicle collision. This makes it possible to smoothly drop the first pivot shaft 13 along the dropping facilitation zone comprising the arc-shaped inclined groove.

Particularly, in the third embodiment, the dropping facilitation zone for facilitating a downward dropping of the first pivot shaft 13 according to the rotational displacement of the rotatable lever 5 during a vehicle collision comprises the inclined groove 15a or the arc-shaped inclined groove. This makes it possible to readily drop the first pivot shaft 13 downward from the mount hole zone 14 in a simplified mechanism.

The third embodiment is designed to push the first pivot shaft 13 obliquely downward in the frontward direction of the vehicle body according to the rotational displacement of the rotatable lever 5 during a vehicle collision. Alternatively, in a control pedal support structure where a push-rod connection site of the pedal body 2 which connects to the push rod 35 for driving the brake booster 4 in the normal state and serves as a pivot point of the pedal body 2 after dropping of the first pivot shaft 13 during a vehicle collision is located below a first-pivot-shaft mounting site where the first pivot shaft 13 is mounted to the pedal bracket 3, the rotatable lever 5 may be designed to push the first pivot shaft 13 during a vehicle collision in a direction approximately parallel to a line connecting the push-rod connection site and the first-pivot-shaft mounting site, so as to allow the first pivot shaft 13 to be dropped from the support zone 20. While this structure is required to largely displace the support zone 20 when the first pivot shaft is dropped, the pedal body 2 can be dropped in the direction approximately parallel to the line connecting the push-rod connection site and the first-pivot-shaft mounting site to prevent the pedal body 2 from being rotationally displaced about the push-rod connection site during the dropping of the first pivot shaft 13 in such a manner as to move an upper portion of the pedal body 2 in the frontward direction of the vehicle body and correspondingly temporarily move the foot pad 34 in the rearward direction of the vehicle body. This makes it possible to obtain an advantage of being able to effectively avoid an undesirable situation where a load to be imposed on the driver's foot is increased due to the rearward movement of the foot pad 34.

Further, the rotatable lever 5 adapted to move the first pivot shaft 13 so as to allow the first pivot shaft 13 to be dropped below the mount hole zone 14 may further include push means consisting of an extension portion 28a which is adapted, during the vehicle collision, to be brought into contact with the pedal body 2 at a position below the first pivot shaft 13 (see FIG. 8) so as to push an upper portion of the pedal body 2 in the rearward direction of the vehicle body. This makes it possible to readily drop the first pivot shaft from the mount hole zone 14 and subsequently change a lever ratio of the rotatable lever 5 for moving the pedal body 2 so as to largely displace the upper portion of the pedal body 2 in the rearward direction of the vehicle body about the push-rod connection site and correspondingly largely displace the foot pad 34 in the frontward direction of the vehicle body to effectively reduce a load to be imposed on driver's foot.

That is, in the case where the dropping means is composed of the rotatable lever 5 as described above, when the corner 28 of the rotatable lever 5 is brought into contact with the first pivot shaft 13 to allow the first pivot shaft 13 to be dropped from the mount hole zone 14, the pushing force of the rotatable lever 5 can be increased based on the principle of leverage to readily drop a top end of the pedal body 2 by a larger force. Further, a pushed portion of the pedal body 2 to be pushed by the extension portion 28a of the rotatable lever 5, i.e., a contact portion of the pedal body 2 to be subjected to contact with the extension portion 28a, may be set at a position closer to the push-rod connection site serving as the pivot point of the pedal body 2 to produce a larger swing displacement of the pedal body 2 and correspondingly largely move the foot pad 34 in the forward direction of the vehicle body. This makes it possible to effectively reduce a load to be imposed on driver's foot from the foot pad 34 formed at the lower end of the pedal body 2, i.e., reduce a load to be applied to driver's foot due to an inertia force causing a frontward movement of the driver in response to a load of a front impact vehicle collision.

Particularly, in the third embodiment, the push means is composed of the extension portion 28a formed in the rotatable lever 14 to extend in the frontward direction of the vehicle body relative to the first-pivot-shaft mounting site. Thus, after the first pivot shaft 13 is readily dropped from the mount hole zone 14, a portion of the pedal body 2 adjacent to the push rod 35 can be pushed through the push means consisting of the extension portion 28a to largely displace the upper portion of the pedal body 2 about the push-rod connection site and correspondingly largely move the foot pad 34 in the frontward direction of the vehicle body so as to obtain an advantage of effectively reduce a load to be imposed on driver's foot.

Further, the control pedal support structure according to the third embodiment is designed such that, in the event of a vehicle collision, a forward end of the extension portion 28a of the rotatable lever 5 is brought into contact with the pedal body 2 at a position below the first pivot shaft 13 (see FIG. 8), so that the forward end of the extension portion 28a of the rotatable lever 5 can be brought into contact with the upper portion of the pedal body 2 after an elapse of a given time from initiation of the dropping of the first pivot shaft 13 from the mount hole zone 14, i.e., after the first pivot shaft 13 is fully dropped from the mount hole zone 14 and moved into the opening zone 19 located below the mount hole zone 14. This makes it possible to effectively avoid an undesirable situation where the upper portion of the pedal body 2 is pushed when the first pivot shaft 13 is still held in the mount hole zone 14 or the inclined grooves 15, i.e., when the restraint state of the pedal body 2 relative to the pedal bracket 3 is maintained. Thus, in the event of a vehicle collision, the upper portion of the pedal body 2 can be reliably moved in the rearward direction of the vehicle body and correspondingly move the foot pad 34 in the frontward direction of the vehicle body so as to obtain an advantage of effectively reduce a load to be imposed on driver's foot. Further, in the normal state, the forward end of the extension portion 28a can be disposed at a position spaced apart from the pedal body 2 by a given distance, to avoid an undesirable situation where the extension portion 28a pushes the pedal body 2 due to disturbances, such as vibrations of the vehicle body, even during normal vehicle running, so as to obtain an advantage of constantly maintaining a stable supported state of the pedal body 2.

In place of the mechanism in the above embodiments where the push means consisting of the extension portion 28a of the rotatable lever 5 is brought into contact with the pedal body 2 to move the pedal body 2 in the rearward direction of the vehicle body, the push means may be composed of bias means, such as a tension spring, for biasing the top end of the pedal body 2 in the rearward direction of the vehicle body. In this case, just after the first pivot shaft 13 is dropped from the support zone of the pedal bracket 3 during a vehicle collision, the upper portion of the pedal body 2 may be moved in the rearward direction of the vehicle body by the tension spring and correspondingly move the foot pad 34 in the frontward direction of the vehicle body.

As shown in FIGS. 2 to 4, in the first embodiment, a notch 31 is formed in a laterally central region of the frontward end of the top plate 28 of the rotatable lever 5 to have a reverse taper shape, i.e., have a width which gradually decreases in the rearward direction of the vehicle body, and the frontward end of the extension portion 28a is formed to have a lateral width greater than that of the contact portion of the pedal body 2, so as to allow the notch 31 to serve as leading means for leading the contact portion of the pedal body 2 to an approximately lateral center of the frontward end of the extension portion 28a when the extension portion 28a is brought into contact with the pedal body 2. Thus, when the pedal body 2 is swingingly displaced, the pedal body 2 can be led toward the laterally central position of the extension portion 28a along the leading means consisting of the notch 31. This provides an advantage of being able to further effectively prevent an undesirable situation where the pedal body 2 gets stuck with a component of the vehicle body due to a large lateral displacement of the pedal body 2 released from the restraint state relative to the pedal bracket 3.

While, in the first embodiment, the notch 31 is formed in the frontward end of the extension portion 28a of the rotatable lever 5 to serve as the leading means for leading the contact portion of the pedal body 2 toward the lateral center of the frontward end of the extension portion 28a when the extension portion 28a is brought into contact with the pedal body 2, the leading means is not limited to the notch 31, but may be any other suitable means capable of obtaining the same effect. For example, the leading means may be provided by forming respective inner surfaces of the sidewall plates 27 protruding from the laterally opposite edges of the extension portion 28a to have a taper shape, i.e., have a distance between the respective inner surfaces of the sidewall plates 27 which increases in a direction opposite to the extension portion 28a.

Further, contrary to the above embodiment where the frontward end of the extension portion 28a is formed to have a lateral width greater than that of the contact portion of the pedal body 2, and the leading means is formed in the frontward end of the extension portion 28a, the contact portion of the pedal body 2 may be formed to have a lateral width greater than that of the frontward end of the extension portion 28a, and formed with the leading means for leading the frontward end of the extension portion 28a toward a lateral center of the contact portion of the pedal body 2 when the pedal body 2 comes into contact with the extension portion 28a. This structure also provides an advantage of being able to reliably bring the frontward end of the extension portion 28a into contact with the pedal body 2 and reliably move the upper portion of the pedal body 2 in the rearward direction of the vehicle body while keeping a stable posture thereof. The pedal-side leading means may be readily made up of a depression formed in the contact portion of the pedal body 2 to have a reverse taper shape in section, i.e., have a lateral width which increases toward an opening of the depression.

Further, as shown in FIG. 4, the top plate 28 of the rotatable lever 5 may be cut out over a given region adjacent the notch 31 in the extension portion 28a to form a rectangular-shaped opening 28b to reduce the rigidity of the extension portion 28a. In this case, when the extension portion 28a is brought into contact with the pedal body 2, the extension portion 28a can be elastically deformed to absorb an impact force to some extent so as to stably move the upper portion of pedal body 2 in the rearward direction of the vehicle body according to the rotational displacement of the extension portion 28a.

That is, in the above embodiment, cushioning means for cushioning an impact force to be applied to the pedal body 2 when the extension portion 28a is brought into contact with the pedal body 2 is made up of the opening 28b. This makes it possible to prevent the upper portion of the pedal body 2 from being excessively spaced apart from the extension portion 28a and rapidly moved in the rearward direction of the vehicle body due to an excessively increased impact force at the contact, so as to effectively avoid occurrence of an unstable behavior of the pedal body 2. Thus, in the event of a vehicle collision, the upper portion of the pedal body 2 can be stably moved in the rearward direction of the vehicle body according to the rotational displacement of the extension portion 28a while allowing the upper portion of the pedal body 2 to be pushed by the extension portion 28a.

The cushioning means is not limited to the opening 28b, but may be any other suitable means capable of obtaining the same effect. For example, an elastic material may be attached on the extension portion 28a to absorb the impact force.

Further, contrary to the above embodiment where the cushioning means is provided in the extension portion 28a, pedal-side cushioning means for cushioning the impact force in the same manner may be provided in the pedal body 2. For example, the pedal-side cushioning means may be readily achieved by attaching an elastic material onto the contact portion of the pedal body 2.

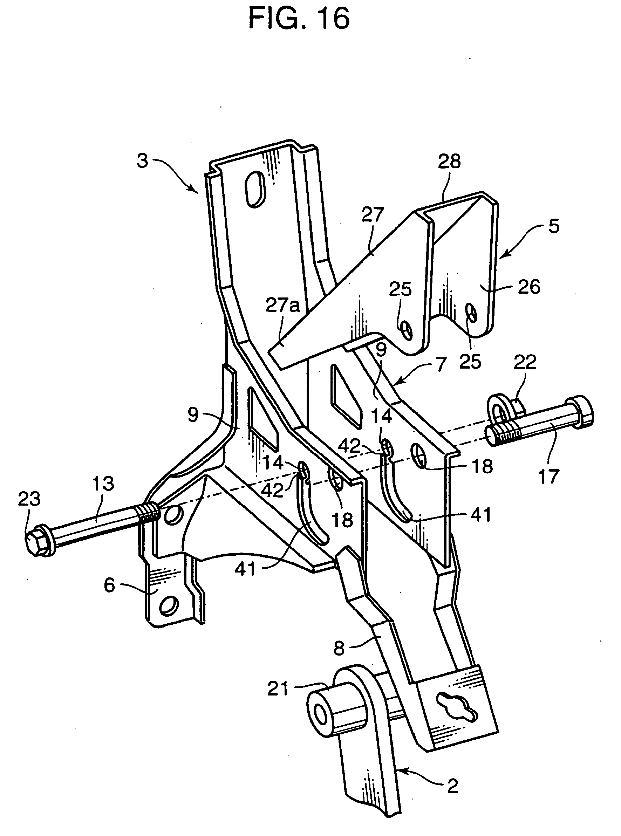

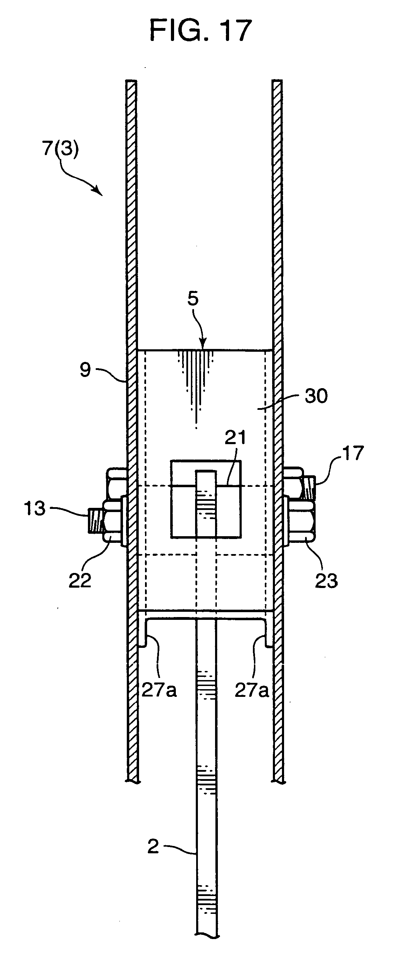

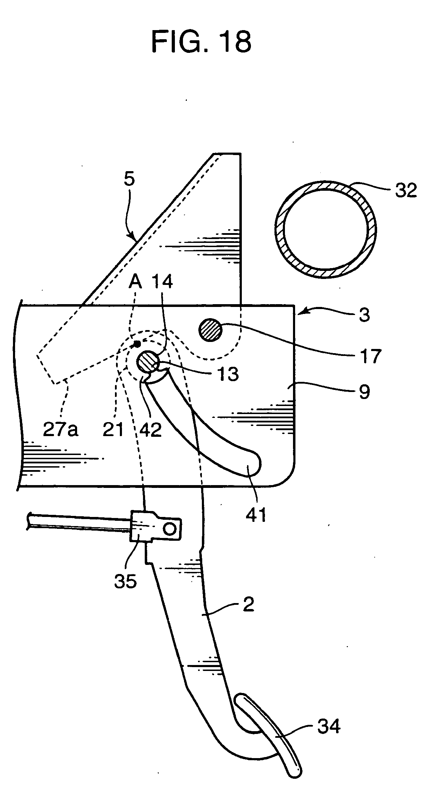

FIGS. 16 to 20 show a control pedal support structure according to a fourth embodiment of the present invention. The control pedal support structure according to the fourth embodiment comprises a pedal brochette 3 formed by omitting the horizontal plates 10, the outer plates 11 and the inclined plates 12 from the pedal bracket 3 in the first embodiment. The pedal bracket 3 has a pair of right and left sidewall plates 9 each formed with a mount hole 14 for allowing a first pivot shaft 13 serving as a pinot point of a pedal body 2 to be inserted thereinto, a guide groove 41 curvedly communicating with the mount hole 14 and extending from a lower peripheral edge of the mount hole 14 in the rearward direction of the vehicle body, and a mount hole 18 for allowing a second pivot shaft 17 serving as a pinot point of a rotatable lever 5 to be inserted thereinto. As in the first embodiment, the mount holes 14 provide a mount hole zone for mounting thereon the first pivot shaft 13, and the mount holes 18 provide a mount hole zone for mounting thereon the second pivot shaft 17.

A shank of the first pivot shaft 13 is inserted into the mount holes 14 of the bracket body 7 and an insertion hole formed in a boss 21 of the pedal body 2, and than a nut 20 is screwed on one end of the first pivot shaft 13. In this manner, the nut 20 and a bolt head 20 of the first pivot shaft 13 are brought into press contact, respectively, with peripheries of the mount holes 14 to fasten the first pivot shaft 13 to the pedal bracket 3 while allowing the pedal body 2 to be swingable supported by the first pivot shaft 13. A pair of front and rear protruding portions 42 are formed at an upper end of the guide groove 41, i.e., a connection region between the mount hole 14 and the guide groove 41, in opposed relation to each other. The two pairs of protruding portions provide a support zone for supporting the first pivot shaft 13 from therebelow to restrict a downward movement of the first pivot shaft 13.

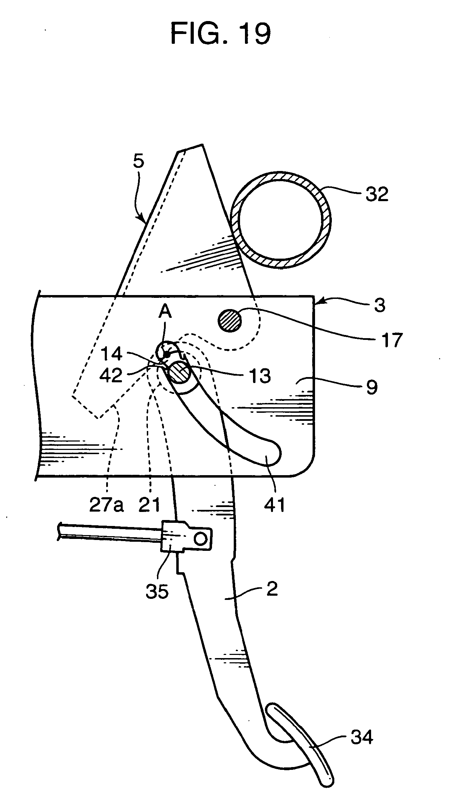

In the above support structure, when a dash panel 1 (see FIG. 1) and the pedal bracket 3 is moved rearward during a vehicle collision, and a rearward end of the rotatable lever 5 mounted to the pedal bracket 3 comes into contact with a vehicle body-side member 32 consisting of an instrument panel reinforcement, respective extension portions 27a of a pair of sidewall plates 27 of the rotatable lever 5 is rotationally displaced downward about the second pivot shaft 17. Thus, as shown in FIG. 19, the extension portions 27a are brought into contact with the boss 21 of the pedal body 2 to push the first pivot shaft 13 downward, and correspondingly the protruding portions (i.e., support zone) supporting the first pivot shaft 13 are deformed downward to release a supported state of the first pivot shaft 13. That is, bottom surfaces of the extension portions 27a have a releasing push zone A for pushing the first pivot shaft 13 during a vehicle collision to release the supported state of the first pivot shaft 13.

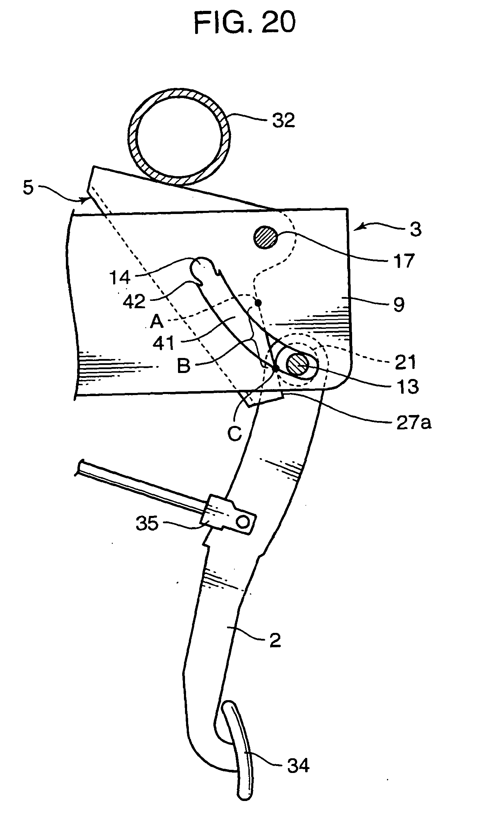

As shown in FIG. 20, when the pedal bracket 3 is further moved rearward due to an impact load of the vehicle collision, the first pivot shaft 3 released from the supported state is pushed by the extension portions 27a of the rotatable lever 5 and moved in the rearward direction of the vehicle body along the guide grooves 41. In this manner, an upper portion of the pedal body 2 is moved in the rearward direction of the vehicle body about a push-rod connection side where a push rod 35 for driving a brake booster 4 (see FIG. 1) is connected to the pedal body 2, and correspondingly a foot pad 34 formed at a lower end of the pedal body is moved in the frontward direction of the vehicle body.

Each of the guide grooves 41 are formed in such a manner that a distance from the second pivot shaft 17 serving as a pivot point of the rotatable lever 5 increases in the rearward direction of the vehicle body. Thus, the first pivot shaft 13 is gradually slidingly displaced (along the bottom surfaces of the extension portions 27a) in a direction away from the second pivot shaft 17 as the first pivot shaft 13 is moved along the guide grooves 41 in the rearward direction of the vehicle body. In other words, a push position of the extension portions 27a for moving the first pivot shaft 13 in the rearward direction of the vehicle body through the boss 21 of the pedal body 2 is gradually moved from the releasing push zone A toward frontward ends of the extension portions 27a along with the rearward movement of the first pivot shaft 13, and finally moved to a position C spaced apart from the releasing push zone A by a given distance, as shown in FIG. 20. Given that a region between the releasing push zone A and the position C is a zone B, the rotatable lever 5 is operable to push and move the first pivot shaft 13 in the rearward direction of the vehicle body (while slidingly displacing the first pivot shaft 13 along the bottom surfaces of the extension portions 27a) by the zone B formed in the bottom surfaces of the extension portions 27a. That is, a moving push zone for pushing and moving the first pivot shaft 13 released from the supported state, in the rearward direction of the vehicle body, is made up of the zone B of the extension portions 27a.

According to the fourth embodiment, during normal vehicle running, i.e., in a normal state, the pedal body 2 is supported relative to the pedal bracket 3 through the first pivot shaft 13 extending in a lateral direction of the vehicle body, while obtaining a stable supported state of the pedal body 2 in a simplified mechanism. Specifically, the mount hole zone 14 for mounting therein the first pivot shaft 13 and the protruding portions 42 (i.e., support zone) for supporting the first pivot shaft 13 at a position below the mount hole zone 14 are formed, and the pedal body 2 is supported relative to the pedal bracket 3 through the first pivot shaft 13. Thus, the pedal body 2 can be stably supported in a simplified mechanism without an unplanned release of the supported state of the first pivot shaft 13 as long as the protruding portions 42 are deformed.

In the event of a vehicle collision, the rotatable lever 5 supported relative to the pedal bracket 3 through the second pivot shaft 17 is brought into interference with the vehicle body-side member 32 in such a manner as to be rotationally displaced. Then, based on the rotational displacement of the rotatable lever 5, the supported state of the first pivot shaft 13 is released and the first pivot shaft 13 is moved in the rearward direction of the vehicle body to move the pedal body 2 in the rearward direction of the vehicle body about the push-rod connection site for the push rod 35 adapted to drive the brake booster 4, and correspondingly move the foot pad 34 at the lower end of the pedal body 2 in the frontward direction of the vehicle body. This makes it possible to effectively reduce a load to be imposed on driver's foot from the foot pad 34 during the vehicle collision.

As above, in the fourth embodiment, the rotatable lever 5 is provided with the releasing push zone A for pushing the first pivot shaft 13 to release the supported state of the first pivot shaft 13, and the moving push zone B for pushing and moving the first pivot shaft 13 released from the supported state, in the rearward direction of the vehicle body. Further, a distance between the moving push zone B and the second pivot shaft 17 serving as the pivot point of the rotatable lever 5 is set at a value greater than that between the releasing push zone A and the second pivot shaft 17. This makes it possible to readily release the supported state of the first pivot shaft 13 and then largely move the first pivot shaft 13 released from the supported state, in the rearward direction of the vehicle body, so as to obtain an advantage of effectively reducing a load to be imposed on driver's foot.

Specifically, when the supported state of the first pivot shaft 13 is released, the first pivot shaft 13 is pushed by the releasing push zone A located at a position closer to the second pivot shaft 17 serving as the pivot point of the rotatable lever 5. Thus, the first pivot shaft 13 can be pushed by a large pushing force to readily release the supported state of the first pivot shaft 13. Then, after the release of the supported state of the first pivot shaft 13, the first pivot shaft 13 may be moved in the rearward direction of the vehicle body without applying so large pushing force. Thus, the first pivot shaft 13 can be pushed by the moving push zone B located at a position farther to the second pivot shaft 17, i.e., a lever ratio of the rotatable lever 5 is changed, to largely move the first pivot shaft 13 in the rearward direction of the vehicle body within a short period of time. This makes it possible to largely move the foot pad 34 formed at the lower end of the pedal body 2, in the frontward direction of the vehicle body within a short period of time so as to effectively reduce a load to be imposed on driver's foot.

Further, in the fourth embodiment, the guide grooves 41 each curvedly extending downward in the rearward direction of the vehicle body are formed in the sidewall plates 9 of the bracket body 7 to serve as guide means for guiding the first pivot shaft 13 released from the supported state relative to the protruding portions 42, in the rearward direction of the vehicle body. Thus, the first pivot shaft 13 released from the supported state can be smoothly moved in the rearward direction of the vehicle body to reliably move the foot pad 34 in the frontward direction of the vehicle body so as to obtain an advantage of effectively reduce a load to be imposed on driver's foot.

In the fourth embodiment, along the guide grooves 41 formed in such a manner that a distance from the second pivot shaft 17 increases in the rearward direction of the vehicle body the first pivot shaft 13 is pushed by the moving push zone B of the rotatable lever 14, and moved in the rearward direction of the vehicle body while being gradually slidingly displaced in a direction away from the second pivot shaft 17. This provides an advantage of being able to largely move the first pivot shaft 13 in the rearward direction of the vehicle body smoothly and stably.

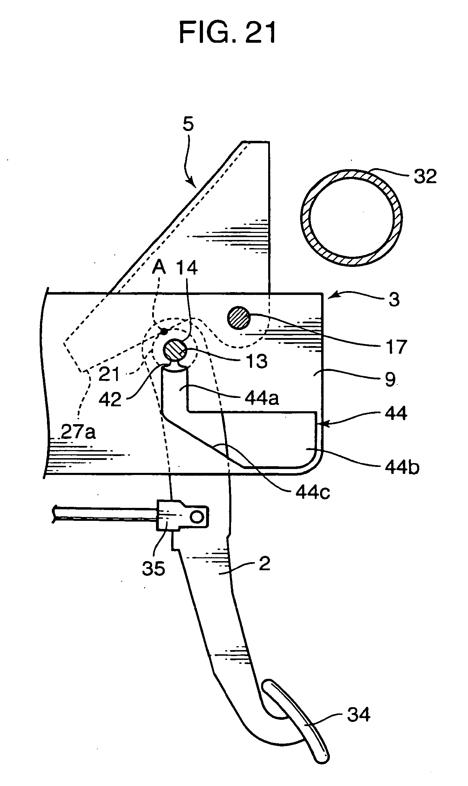

FIGS. 21 to 23 show a control pedal support structure according to a fifth embodiment of the present invention. The control pedal support structure according to the fifth embodiment comprised a pedal bracket 3 which includes a bracket body 7 having a pair of right and sidewall plates 9. As the guide means for guiding the first pivot shaft 13 released from the supported state in the rearward direction of the vehicle body, in place of the guide grooves 41 in the first embodiment, each of the sidewall plates 9 is formed with an opening 44 which consists of a vertical guide groove 44a communicating with a mount hole 14 and extending downward, and a wide opening 44b extending from a lower end of the guide groove 44a. Further, the wide opening 44 includes an inclined inner peripheral region inclined downward in the rearward direction of the vehicle body. The ruminating structure or mechanism is the same as that in the fourth embodiment.

In the event of a vehicle collision, when the pedal bracket 3 is moved rearward, and the rearward end of the rotatable lever 5 mounted to the pedal bracket 3 is brought into interference with the vehicle body-side member 32, the rotatable lever 5 is rotationally displaced about the second pivot shaft 17. Then, a zone A which is a contact zone of the extension portions 27a with the boss 21 of the pedal body 2 pushes the first pivot shaft 13 downward through the boss 21, and correspondingly, the protrusions (support zone) 42 formed below the mount hole zone 14 are deformed to release the supported state of the first pivot shaft 13. Then, the first pivot shaft 13 released from the supported state is moved into the respective vertical guide grooves 44a of the openings 44. That is, a releasing push zone for pushing the first pivot shaft 13 during a vehicle collision to release the supported state of the first pivot shaft 13 is made up of the zone A formed in the bottom surfaces of the extension portions 27a.

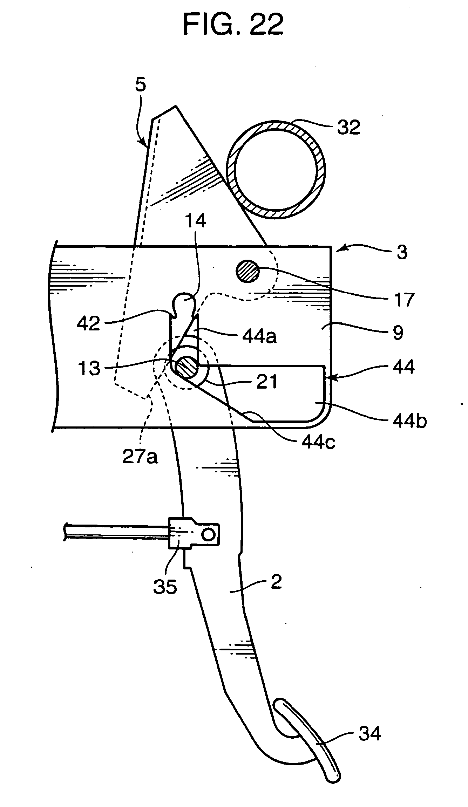

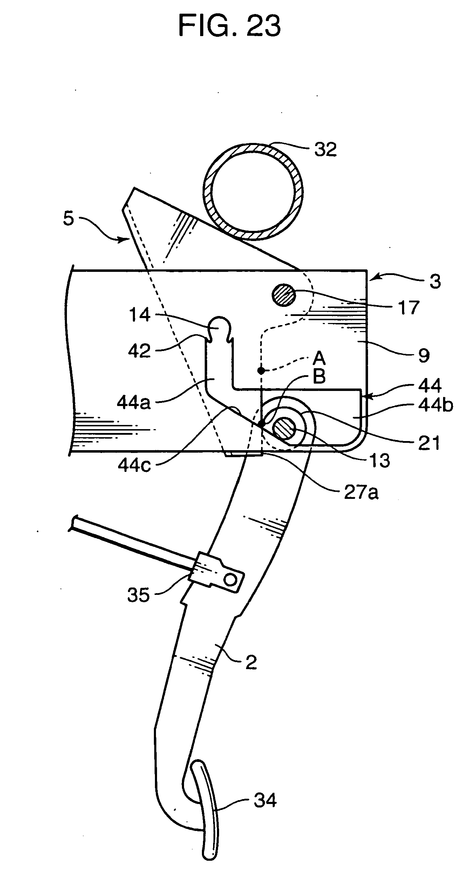

As shown in FIG. 22, when the pedal bracket 3 is further moved rearward due to an impact load of the vehicle collision, the first pivot shaft 3 released from the supported state is pushed by the extension portions 27a and moved downward along the vertical guide grooves 44a. In this process, the first pivot shaft 13 is slidingly displaced in a direction away from the second pivot shaft 17 serving as the pivot point of the rotatable lever 5 along the bottom surfaces of the extension portions 27a. Then, as shown in FIG. 23, when the pedal bracket is further moved rearward, the first pivot shaft 13 is pushed by a zone B of the extension portions 27a spaced apart from the releasing push zone A by a given distance, and moved in the rearward direction of the vehicle body along the inclined inner peripheral region 44c in the wide opening 44b. That is, a moving push zone for pushing and moving the first pivot shaft 13 released from the supported state, in the rearward direction of the vehicle body, is made up of the zone B of the extension portions 27a.

As above, in the fifth embodiment, during a vehicle collision, the first pivot shaft 13 is pushed by the releasing push zone A formed in the bottom surfaces of the extension portions 27a to release the supported state of the first pivot shaft 13, and then the first pivot shaft 13 released from the supported state is moved downward along the vertical guide grooves 44a. After completion of the downward movement, the first pivot shaft 13 is pushed by the moving push zone B located at a position away from the second pivot shaft 17 by a distance greater than that of the releasing push zone A, and moved in the rearward direction of the vehicle body along the inclined inner peripheral region 44c. Thus, as with the fourth embodiment, the supported state of the first pivot shaft 13 can be readily released by a large force, and the first pivot shaft 13 released from the supported state can be largely moved in the rearward direction of the vehicle body. This makes it possible to largely move the foot pad 34 formed at the lower end of the pedal body 2 so as to effectively reduce a load to be imposed on driver's foot.

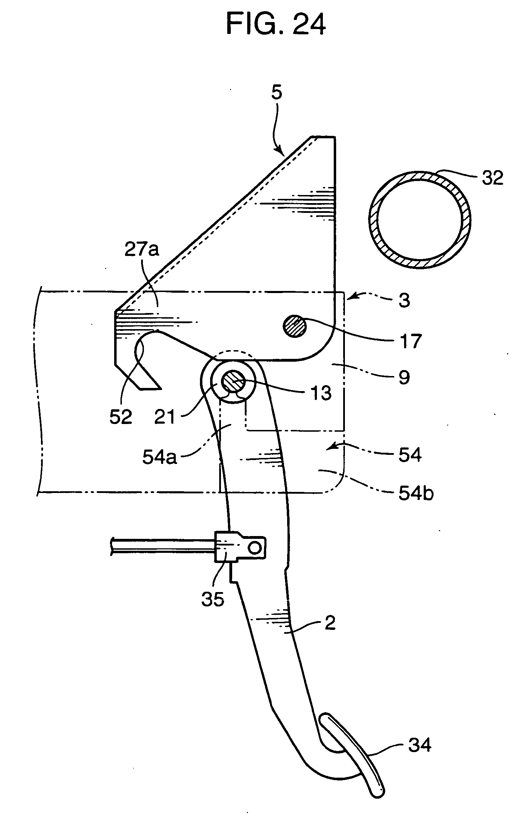

The fourth and fifth embodiments have been described based on an example where the guide means (guide grooves 41 or the opening 44) for guiding the first pivot shaft 13 released from the supported state in the rearward direction of the vehicle body during a vehicle collision is formed in the sidewall plates 9 of the bracket body 7. Alternatively, the guide means may be formed in the rotatable lever 5. FIGS. 24 to 26 show a control pedal support structure according to a sixth embodiment of the present invention, where the guide means is formed in a rotatable lever 5

In the sixth embodiment, each extension portion 27a of the rotatable lever 5 is formed with a holding slit 52 for holding the first pivot shaft 13 (or boss 21) released from the supported state. Each sidewall of a bracket body 7 is formed with an opening 54 consisting of a vertical guide groove 54a and a wide opening 54b. Among them, differently from the fifth embodiment, the wide opening 54b is not formed with an inclined inner peripheral region (inclined inner peripheral region 44c in the fifth embodiment) for guiding the first pivot shaft 13 in the rearward direction of the vehicle body. Thus, just after the first pivot shaft 13 is moved downward along the vertical guide grooves 54a and moved into the wide openings 54b, it will be fully disengaged from the bracket body 7.

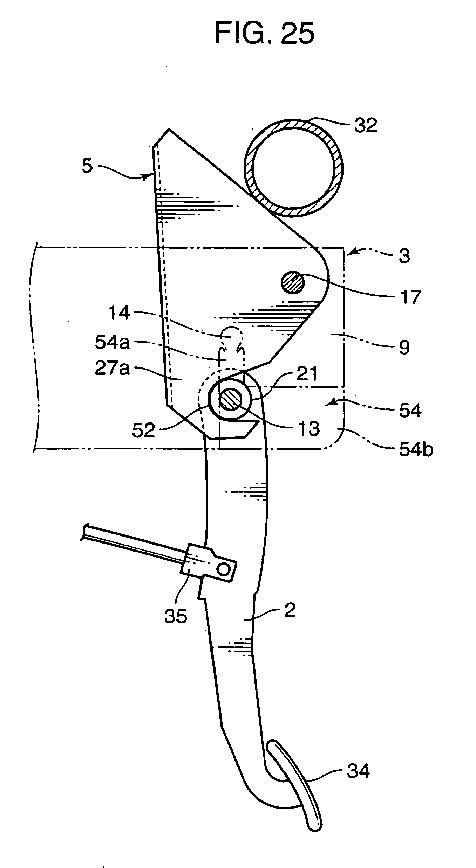

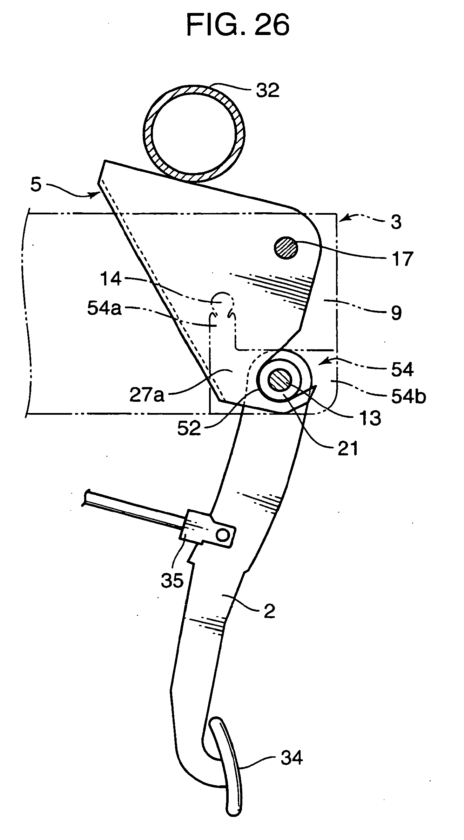

In an initial stage of a vehicle collision illustrated in FIG. 25, the first pivot shaft 13 pushed by the extension portions 27a of the rotatable lever 5 and released from the supported state is moved downward along the vertical guide grooves 54a, and disengaged from the bracket body 7. At this moment, the holding slits 52 formed in the extension portions 27a has been moved downward to a position below the vertical guide grooves 54a according to the rotational displacement of the rotatable lever 5, and thereby the first pivot shaft 13 disengaged from the bracket body 7 can be received by the holding slits 52. Then, in a last stage of the vehicle collision, as shown in FIG. 26, the first pivot shaft 13 held in the holding slits 52 is largely moved in the rearward direction of the vehicle body, and correspondingly the foot pad 34 of the pedal body 2 is largely moved in the frontward direction of the vehicle body.

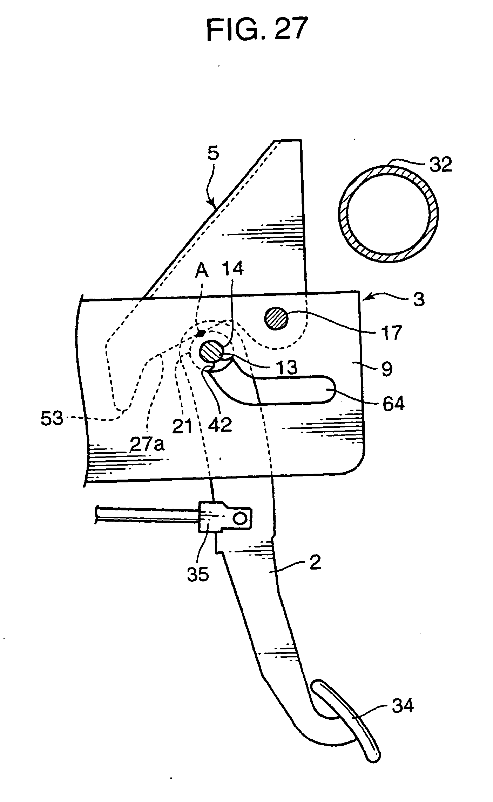

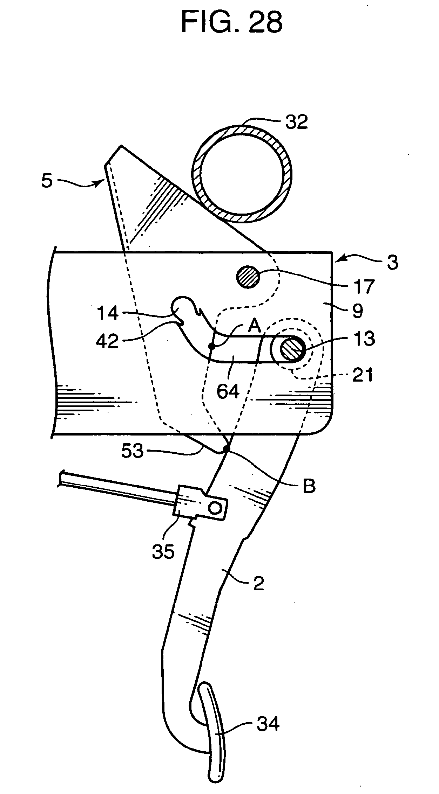

FIGS. 27 and 28 show a control pedal support structure according to a seventh embodiment of the present invention. In the seventh embodiment, a protruding portion 53 protruding downward is formed in the frontward end of the top plate 28 and the sidewall plates 27 (extension portions 27a). This protruding portion 53 is formed at a position for allowing the protruding portion 53 to be brought into contact with a frontward surface of the pedal body 2 according to the rotational displacement of the rotatable 5 during a vehicle collision.

In the event of a vehicle collision, when the pedal bracket 3 is moved rearward, and the rearward end of the rotatable lever 5 mounted to the pedal bracket 3 is brought into interference with the vehicle body-side member 32, the rotatable lever 5 is rotationally displaced about the second pivot shaft 17. Then, a zone A which is a contact zone of the extension portions 27a with the boss 21 of the pedal body 2 pushes the first pivot shaft 13 downward through the boss 21, and correspondingly the protrusions (support zone) 42 protrudingly formed below the mount hole zone 14 are deformed to release the supported state of the first pivot shaft 13. Then, the first pivot shaft 13 released from the supported state is moved into the guide grooves 64 communicating with the respective mount holes 14. That is, a releasing push zone for pushing the first pivot shaft 13 during a vehicle collision to release the supported state of the first pivot shaft 13 is made up of the zone A formed in the bottom surfaces of the extension portions 27a.

As shown in FIG. 28, when the pedal bracket 3 is further moved rearward due to an impact load of the vehicle collision, i.e., after an elapse of a given time from the release of the supported state of the first pivot shaft 13, the zone B as the frontward end of the protruding portion 53 is brought into contact with the frontward surface of the upper portion of the pedal body 2 according to the rotational displacement of the rotatable lever 5, and correspondingly the first pivot shaft 3 released from the supported state is moved in the rearward direction of the vehicle body along the grooves 64. That is, a moving push zone for pushing and moving the upper portion of the pedal body 2 in the rearward direction of the vehicle body after an elapse of given time from the release of the supported state of the first pivot shaft 13 is made up of the zone B of the protruding portion 53.

As above, in the seventh embodiment, the first pivot shaft 13 is pushed by the releasing push zone A formed in the bottom surfaces of the extension portions 27a to release the supported state of the first pivot shaft 13. Then, after an elapse of a given time from the release of the supported state of the first pivot shaft 13, the upper portion of the pedal body 2 is pushed by the moving push zone B located at the position away from the second pivot shaft 17 by a distance greater than that of the releasing push zone A. This provides an advantage of being able to intermittently change a lever ratio of the rotatable lever 5 for pushing the first pivot shaft 13, and correspondingly largely move the first pivot shaft 13 in the rearward direction of the vehicle body. Further, in the seventh embodiment, the upper portion of the pedal body 2 to be pushed by the moving push zone B is spaced apart from the second pivot shaft 17 serving as the pivot point of the rotatable lever 5 by a distance greater than that of the first pivot shaft 13. Thus, as compared with the fourth to sixth embodiments designed to push and move the first pivot shaft 13 in the rearward direction of the vehicle body, the lever ratio of the rotatable lever 5 can be changed in a wider range to largely move the first pivot shaft 13 in the rearward direction of the vehicle body within a shorter period of time.

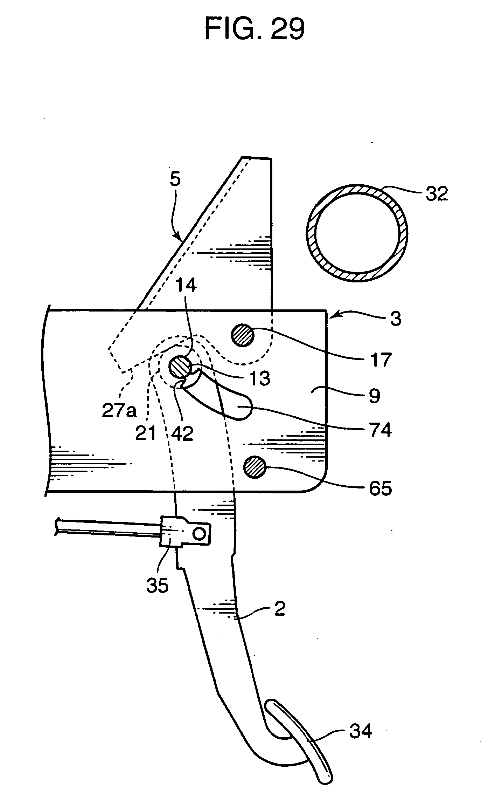

FIGS. 29 to 31 show a control pedal support structure according to an eighth embodiment of the present invention. In the eighth embodiment, the bracket body 7 is provided with an interference segment 65 at a position between a push-rod mounting site where the push rod 35 for driving the brake booster 4 is connected to the pedal body 2 and a first-pivot-shaft mounting site where the first pivot 13 is mounted to the pedal bracket 3. The interference segment 65 is disposed in opposed relation to a rearward surface of the pedal body 2 with a given distance therebetween.

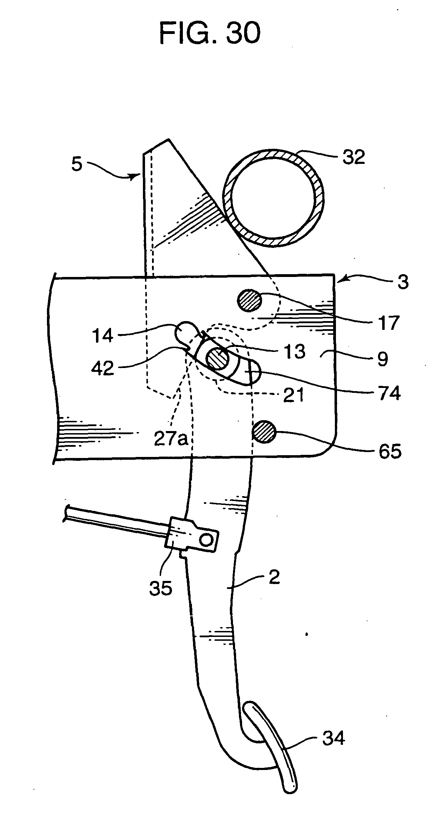

In the event of a vehicle collision, when the pedal bracket 3 is moved rearward, and the rearward end of the rotatable lever 5 mounted to the pedal bracket 3 is brought into interference with the vehicle body-side member 32, the rotatable lever 5 is rotationally displaced about the second pivot shaft 17. Then, the extension portions 27 push the first pivot shaft 13 downward through the boss 21 of the pedal body 21, and correspondingly the protrusions (support zone) 42 protrudingly formed below the mount hole zone 14 are deformed to release the supported state of the first pivot shaft 13. Then, the first pivot shaft 13 released from the supported state is moved into guide grooves 74 communicating with the respective mount holes 14. Thus, as shown in FIG. 30, the upper portion of the pedal body 2 is moved in the rearward direction of the vehicle body about the push-rod connection site for the push rod 35 adapted to drive the brake booster 4, and the rearward surface of the pedal body 2 is brought into contact (interference) with the interference segment 65.

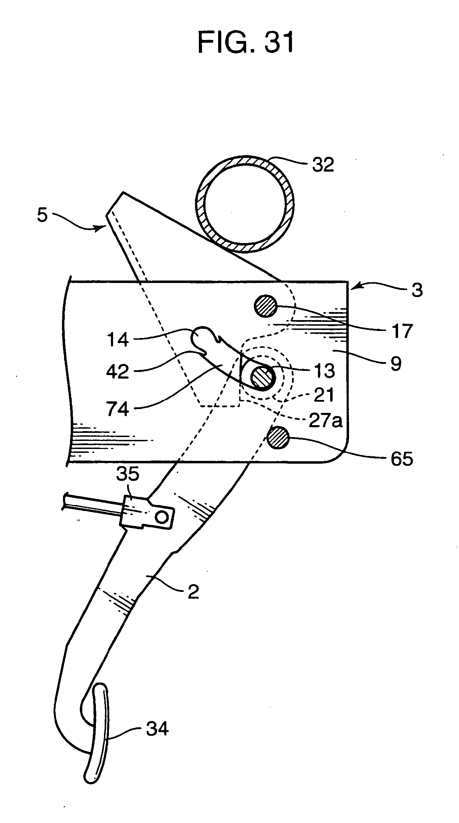

As shown in FIG. 31, when the pedal bracket 3 is further moved rearward due to an impact load of the vehicle collision, the first pivot shaft 13 is pushed by the extension portions 27a of the rotatable lever 5 and moved in the rearward direction of the vehicle body, and correspondingly the upper portion of the pedal body 2 is then moved in the rearward direction of the vehicle body about the contact site where the pedal body 2 is in contact with the interference segment 65.

As above, in the eighth embodiment, in addition to the rotatable lever 5 for releasing the supported state of the first pivot shaft 13 and moving the first pivot shaft 13 released from the supported state during a vehicle collision, the interference segment 65 adapted to come into interference with the rearward surface of the pedal body 2 when the first pivot shaft 13 is moved in the rearward direction of the vehicle body is arranged at the position between the push-rod mounting site and the first-pivot-shaft mounting site. Thus, a position of a pivot point about which the pedal body 2 is to be swingingly displaced according to the rearward movement of the first pivot shaft 13 during a vehicle collision can be changed between an initial stage and a last stage of the vehicle collision, and correspondingly the foot pad 34 formed at the lower end of the pedal body 2 can be largely moved in the frontward direction of the vehicle body within a short time of period. Specifically, in the initial stage of the vehicle collision, the upper portion (first pivot shaft 13) of the pedal body 2 is moved in the rearward direction of the vehicle body about the push-rod connection site. In the last stage of the vehicle collision, the rearward surface is brought into interference with the interference segment 65 to change a position of the pivot point of the pedal body 2 from the push-rod connection site to a position of the interference segment 65. Thus, the pivot point of the pedal body 2 can be moved to a position closer to the first pivot shaft 13 which is being pushed and moved rearward by the rotatable lever 5 to largely move the foot pad 34 formed at the lower end of the pedal body 2, in the frontward direction of the vehicle body within a short time of period.

The control pedal support structures described based on the above embodiments are an example of an embodiment of the present invention, and the specific structures and mechanisms thereof may be appropriately changed and modified without departing from a spirit and scope of the present invention. For example, while the control pedal support structures according to the fourth to eighth embodiments are designed such that the first pivot shaft 13 is supported by the pair of front and rear protruding portions protrudingly formed below the mount hole 14, and the protruding portions are pressed downward during a vehicle collision to release the supported state of the first pivot shaft 13, the support configuration is not limited thereto, but may be any other suitable configuration capable of obtaining a stable supported state of the first pivot shaft 13 in the normal state and adequately releasing the supported state of the first pivot shaft 13 in response to occurrence of a vehicle collision. For example, a closing portion for completely partitioning between the mount hole 14 and the guide groove 41 may be formed, and then broken in the event of a vehicle collision.

In summary, as a first aspect of the present invention, a support structure for a control pedal which is pivoted relative to a dash panel and adapted to be swingingly operated in frontward and rearward directions of a vehicle body. This support structure comprises a pedal bracket fixed to the dash panel to extend in the rearward direction of the vehicle body, and a pedal body swingably supported relative to the pedal bracket through a pedal pivot shaft mounted to the pedal bracket to extend in a lateral direction of the vehicle body. In the support structure, the pedal bracket includes a pedal-pivot-shaft mount hole zone for mounting thereon the pedal pivot shaft, and a pedal-pivot-shaft support zone located below the pedal-pivot-shaft mount hole zone and adapted to support the pedal pivot shaft from therebelow, and the support structure includes dropping means adapted, during a vehicle collision, to deform the pedal-pivot-shaft support zone so as to allow the pedal pivot shaft to be dropped below the pedal-pivot-shaft mount hole zone.

According to the above support structure, during normal vehicle running, i.e., in a normal state, the pedal pivot shaft can be stably mounted on the pedal-pivot-shaft mount hole zone of the pedal bracket, to obtain an advantage of maintaining a desirable operational feeling when the pedal body is swingingly operated about the pedal pivot shaft, while stably supporting the pedal body in a simplified mechanism. Further, in the event of a vehicle collision, the pedal pivot shaft is pushed downward by the dropping means to drop the pedal pivot shaft below the pedal-pivot-shaft mount hole zone so as to obtain advantage of effectively preventing an undesirable situation where a load is excessively imposed on the driver's foot due to a rearward movement of a foot pad formed at a lower end of the pedal body, in conjunction with the pedal body.

As set forth in the first aspect of the present invention, the support structure includes a rotatable lever swingably supported relative to the pedal bracket through a lever pivot shaft mounted to the pedal bracket to extend in the lateral direction of the vehicle body. The rotatable lever is adapted, during the vehicle collision, to be brought into interference with a vehicle body-side member and thereby rotationally displaced about the lever pivot shaft so as to push the pedal pivot shaft downward. The dropping means is made up of the rotatable lever and the vehicle body-side member.

In a second aspect of the support structure set forth in the above, the pedal pivot shaft is pushed downward by the rotatable lever adapted to be rotationally displaced about the lever pivot shaft. Thus, the pedal pivot shaft can be effectively disengaged from the pedal-pivot-shaft mount hole zone in a simplified mechanism.

In a 3rd aspect of the support structure according to the present invention, the pedal-pivot-shaft support zone may include a protruding portion protruding from one side toward the other side of a lower peripheral edge of the pedal-pivot-shaft mount hole zone relative to an axis of the pedal pivot shaft.

In the support structure, in the normal state, the pedal-pivot-shaft support zone can stably support the pedal pivot shaft. Further, in the event of a vehicle collision, the rotatable lever can push the pedal pivot shaft downward to allow an edge of the pedal-pivot-shaft support zone to be deformed downward. Thus, the pedal pivot shaft can be effectively disengaged from the pedal-pivot-shaft mount hole zone.

As a 4^{th} aspect, in the support structure as described in the 3^{rd} aspect, the protruding portion constituting the pedal-pivot-shaft support zone is formed to protrude from a frontward side toward a rearward side of the pedal-pivot-shaft mount hole zone.

In the support structure, a pushing direction of the rotatable lever against the pedal pivot shaft can be aligned with a dropping direction of the pedal pivot shaft to allow the pedal pivot shaft to be readily dropped from the pedal-pivot-shaft mount hole zone during a vehicle collision.

As a 5^{th} aspect, in the support structure as described in the 4^{th} aspect, the protruding portion constituting the pedal-pivot-shaft support zone has a base end formed with a cutout for facilitating a plastic deformation of the protruding portion.

In the support structure, a pushing direction of the rotatable lever against the pedal pivot shaft can be aligned with a dropping direction of the pedal pivot shaft to allow the pedal pivot shaft to be readily dropped from the pedal-pivot-shaft mount hole zone during a vehicle collision.

As a 6^{th} aspect, the support structure as described in the 5^{th} aspect may further include a deformation suppression segment adapted to be disengageably inserted into the cutout formed in the base end of the protruding portion supporting the pedal pivot shaft, so as to suppress a plastic deformation of the protruding portion.

In the support structure, in the normal state, the deformation suppression segment provided on the rotatable lever can be inserted into the cutout of the pedal bracket to stably support the pedal pivot shaft while preventing a plastic deformation of the pedal-pivot-shaft support zone. In the event of a vehicle collision, the deformation suppression segment can be disengaged from the cutout to facilitate a plastic deformation of the pedal-pivot-shaft support zone so as to allow the pedal pivot shaft to be reliably dropped from the pedal-pivot-shaft mount hole zone.

As a 7^{th} aspect, in the support structure as described in the 6^{th} aspect, the deformation suppression segment adapted to be disengageably inserted into the cutout is provided on the rotatable lever.

In the support structure, the deformation suppression segment provided on the rotatable lever is disengageably inserted into the cutout of the pedal bracket. Thus, in the normal state, the pedal pivot shaft can be stably supported while preventing a plastic deformation of the pedal-pivot-shaft support zone in a simplified mechanism. In the event of a vehicle collision, the deformation suppression segment can be disengaged from the cutout according to the rotational displacement of the rotatable lever to facilitate a plastic deformation of the pedal-pivot-shaft support zone so as to allow the pedal pivot shaft to be reliably dropped from the pedal-pivot-shaft mount hole zone.

As a 8^{th} aspect, the support structure as described in the 7^{th} aspect may be designed such that, during a vehicle collision, the deformation suppression segment of the rotatable lever is disengaged from the cutout before the pedal pivot shaft is pushed downward by the rotatable lever.

In the support structure, in the normal state, the deformation suppression segment can effectively suppress a deformation of the pedal-pivot-shaft support zone. In the event of a vehicle collision, the pedal-pivot-shaft support zone is plastically deformed after the deformation suppression segment is moved out of the cutout. This makes it possible to readily produce a plastic deformation of the pedal-pivot-shaft support zone so as to allow the pedal pivot shaft to be readily dropped from the pedal-pivot-shaft support zone.

In a 9^{th} aspect of the present invention, in the aforementioned support structure, the pedal-pivot-shaft support zone may further comprise a protruding portion located on at least either one of frontward and rearward sides of a lower peripheral edge of the pedal-pivot-shaft mount hole zone.

In the support structure set forth in the above, the structure of the pedal bracket can be simplified while maintaining a stable supported state of the pedal pivot shaft in the normal state, and facilitating a plastic deformation of the pedal-pivot-shaft support zone during a vehicle collision to allow the pedal pivot shaft to be readily dropped from the pedal-pivot-shaft mount hole zone.

Furthermore, in a 10^{th} aspect of the present invention, the aforementioned support structure may be designed such that, during the vehicle collision, the pedal body is disengaged from the pedal bracket just after the pedal pivot shaft is dropped downward from the pedal-pivot-shaft mount hole zone of the pedal bracket.

In the support structure set forth above, the pedal body is disengaged from the pedal bracket just after dropping of the pedal pivot shaft. Thus, even if a vehicle collision occurs in a state when driver's foot is placed on a foot pad formed at a lower end of the pedal body, a restraint state of the pedal body relative to the pedal bracket can be released to effectively prevent an undesirable situation where a load is excessively imposed on the driver's foot due to a rearward movement of the foot pad in conjunction with the pedal body, in an effective manner.

Moreover, in a 11^{th} aspect of the present invention, in the aforementioned support structure, the pedal bracket has a guide zone located in a layout region of the pedal-pivot-shaft support zone and adapted to guide the pedal pivot shaft downward, and the pedal pivot shaft includes a fastener segment adapted to be brought into contact with a region of the pedal-pivot-shaft support zone located above the guide zone, in the lateral direction, so as to allow the pedal pivot shaft to be fastened to the pedal bracket.

In the support structure set forth in the above, in the event of vehicle collision, the pedal-pivot-shaft support zone can be plastically deformed and the pedal pivot shaft can be dropped downward along the guide zone, while restricting a lateral displacement of the pedal pivot shaft. This makes it possible to smoothly disengage the pedal pivot shaft from the pedal bracket while effectively preventing an undesirable situation where the pedal pivot shaft gets stuck with the pedal bracket due to a large lateral displacement and/or a diagonal posture of the pedal pivot shaft dropped from the pedal-pivot-shaft support zone.

As a 12^{th} aspect, in the support structure set forth above, the pedal-pivot-shaft support zone may include a pair of pedal-pivot-shaft support portions formed on right and left sides of the pedal bracket to support laterally opposite ends of the pedal pivot shaft, respectively, and the fastener segment includes two fastener elements each provided in a corresponding one of the laterally opposite ends of the pedal pivot shaft and adapted to be brought into press contact with a corresponding one of the pair of pedal-pivot-shaft support portions, in a laterally opposite direction, so as to allow the laterally opposite ends of the pedal pivot shaft to be fastened to the pedal bracket.

In the support structure set forth above, in the normal state, the pedal pivot shaft can be stably supported by the pedal bracket. In the event of a vehicle collision, the pedal pivot shaft dropped from the pedal-pivot-shaft support zone can be moved downward along the pedal-pivot-shaft support zone to further effectively prevent the pedal pivot shaft from getting stuck with the pedal bracket.

In 13^{th} aspect of the present invention, the support structure set forth in the first aspect of the present invention includes a lateral-displacement restriction segment adapted, during the vehicle collision, to restrict a lateral displacement of the pedal pivot shaft dropped downward from the pedal-pivot-shaft support zone of the pedal bracket, at a given value or less.

In the support structure set forth above, in the event of a vehicle collision, the lateral-displacement restriction segment can prevent the pedal pivot shaft dropped from the pedal-pivot-shaft support zone from being largely displaced during a vehicle collision, and a sectional area of the pedal bracket can be increased to effectively provide enhanced rigidity to the pedal bracket so as to effectively stabilize the supported state of the pedal body in the normal state.

As a 14^{th} aspect, in the support structure as described above, the pedal bracket includes a vertical plate formed with the pedal-pivot-shaft support zone, a horizontal plate extending laterally outward from a lower edge of the vertical plate, and an outer plate extending downward from an outer edge of the horizontal plate. The lateral-displacement restriction segment adapted to restrict the lateral displacement of the pedal pivot shaft includes the outer plate.

In the support structure as described above, the lateral-displacement restriction segment can prevent the pedal pivot shaft dropped from the pedal-pivot-shaft support zone from being largely displaced during a vehicle collision, and a sectional area of the pedal bracket can be increased to effectively provide enhanced rigidity to the pedal bracket so as to effectively stabilize the supported state of the pedal body in the normal state.

In a 15^{th} aspect of the present invention, the support structure as described in the first aspect includes a lateral-displacement restriction segment adapted, during the vehicle collision, to restrict a lateral displacement of the pedal pivot shaft dropped from the pedal-pivot-shaft support zone of the pedal bracket, in such a manner that an allowable range of the lateral displacement is gradually narrowed as the dropped pedal pivot shaft is moved downward. pedal pivot shaft In the event of a vehicle collision

In the support structure set forth above, in the event of a vehicle collision, the lateral-displacement restriction segment can gradually reduce an allowable range of the lateral displacement as the pedal pivot shaft dropped from the pedal-pivot-shaft support zone of the pedal bracket is moved downward. Thus, even if the pedal body temporality has a large lateral displacement just after the restraint state of the pedal body relative to the pedal bracket is released, the lateral displacement of the pedal body can be gradually corrected along with the downward movement. This makes it possible to effectively prevent the pedal body from having a largely lateral displacement just after being released from the restraint state and getting stuck with a component of the vehicle body or the like.

As a 16^{th} aspect, in the support structure set forth in the 11^{th} aspect of the present invention, the pedal bracket is formed with an opening zone for allowing the fastener segment of the pedal pivot shaft dropped downward from the pedal-pivot-shaft support zone of the pedal bracket to pass therethrough. The support structure includes an interference restriction segment for restricting the fastener segment of the pedal pivot shaft from interfering with a periphery of the opening zone of the pedal bracket.

In the support structure described above, in the event of a vehicle collision, the interference restriction segment can prevent the fastener segment of the pedal pivot shaft from being laterally displaced just after the pedal pivot shaft is dropped downward from the pedal-pivot-shaft support zone of the pedal bracket, so as to effectively prevent the fastener segment from getting stuck with the pedal bracket.

In a 17^{th} aspect of the present invention, in the support structure as described in the first aspect of the present invention, the pedal-pivot-shaft support zone of the pedal bracket is adapted to support the pedal pivot shaft in a normal state, and the pedal bracket is formed with a dropping facilitation zone adapted, during the vehicle collision, to facilitate the downward dropping of the pedal pivot shaft according to the rotational displacement of the rotatable lever. The pedal-pivot-shaft support zone is formed to be in contact with the pedal pivot shaft over an angular range of at least about 90 degrees as measured downward from a line of force applied to the pedal bracket from the pedal pivot shaft in response to a pedal pressing operation in the normal state.

In the support structure described above, during normal vehicle running, the pedal body can be supported relative to the pedal bracket fixed to a dash panel through the pedal pivot shaft extending in the lateral direction of the vehicle body to obtain a stable supported state in a simplified mechanism and maintain a desirable operational feeling when the pedal body is swingingly operated. Further, the pedal-pivot-shaft support zone supporting the pedal pivot shaft is formed to be in contact with the pedal pivot shaft over an angular range of about 90 degrees as measured at least downward from a line of force applied to the pedal bracket from the pedal pivot shaft in response to a pedal pressing operation. This makes it possible to apply a sufficient reaction force against the pedal pressing force to the pedal body through the pedal pivot shaft and effectively support the weight of the pedal body so as to adequately ensure a supporting rigidity for the pedal body to reliably maintain a desirable operational feeling of the pedal body.

As a 18^{th} aspect, in the support structure as described in the 17^{th} aspect, the dropping facilitation zone is formed along a turning direction of the pedal pivot shaft pushed by the rotatable lever during the vehicle collision.

In the support structure described above, the dropping facilitation zone is formed along a turning direction of the pedal pivot shaft pushed by the rotatable lever. Thus, the pedal pivot shaft can be readily dropped along the dropping facilitation zone during a vehicle collision.

As a 19^{th} aspect, in the support structure described in the 18^{th} aspect, the dropping facilitation zone comprises a groove.

In the support structure described above, the pedal pivot shaft can be reliably dropped along the dropping facilitation zone comprising a groove in a simplified mechanism.

As a 20^{th} aspect, in the support structure as described in the 18^{th} aspect, the rotatable lever is adapted, during the vehicle collision, to push the pedal pivot shaft obliquely downward in the frontward direction of the vehicle body.

In the support structure described above, the rotatable lever can be arranged to push the pedal pivot shaft obliquely downward in the frontward direction of the vehicle body, and correspondingly the groove (dropping facilitation zone) can be arranged on a frontward side of the vehicle body relative to the pedal-pivot-shaft support zone, i.e., in a direction opposite to that of force to be applied to the pedal bracket from the pedal pivot shaft in response to driver's pedal pressing operation. This makes it possible to effectively prevent deterioration in supporting strength of the pedal-pivot-shaft support zone due to existence of the groove (dropping facilitation zone). Further, the pedal-pivot-shaft support zone can reliably have a sufficient supporting strength in the normal state and allows the pedal pivot shaft to be adequately dropped therefrom during a vehicle collision.

As a 21^{st} aspect, in the support structure as described in the 17^{th} aspect of the invention, the pedal body has a push-rod connection site which connects to a push rod for driving a brake booster in the normal state and serves as a pivot point of the pedal body after the dropping of the pedal pivot shaft during the vehicle collision. The push-rod connection site is located below a pedal-pivot-shaft mounting site where the pedal pivot shaft is mounted to the pedal bracket. The rotatable lever is adapted, during the vehicle collision, to push the pedal pivot shaft in a direction approximately parallel to a line connecting the push-rod connection site and the pedal-pivot-shaft mounting site, so as to allow the pedal pivot shaft to be dropped from the pedal-pivot-shaft support zone.

In the support structure described above, the rotatable lever is arranged such that, during a vehicle collision, it pushes the pedal pivot shaft in a direction approximately parallel to a line connecting the pedal-pivot-shaft mounting site and the push-rod connection site serving as a pivot point of the pedal body after dropping of the pedal pivot shaft. This makes it possible to prevent the pedal body from being rotationally displaced about the push-rod connection site during the dropping of the pedal pivot shaft in such a manner as to move an upper portion of the pedal body in the frontward direction of the vehicle body and correspondingly temporarily move the foot pad in the rearward direction of the vehicle body, and to effectively avoid an undesirable situation where a load to be imposed on the driver's foot is increased due to the rearward movement of the foot pad.

In a 22^{nd} aspect of the present invention, in the support structure as described in the 1^{st} aspect of the present invention, the rotatable lever is integrally provided with push means adapted, after the dropping of the pedal pivot shaft during the vehicle collision, to push an upper portion of the pedal body in the rearward direction of the vehicle body.

In the support structure described above, during normal vehicle running, the pedal body can be supported relative to the pedal bracket fixed to a dash panel, through the pedal pivot shaft extending in a lateral direction of the vehicle body to obtain a stable supported state in a simplified mechanism and maintain a desirable operational feeling when the pedal body is swingingly operated. In the event of a vehicle collision, the rotatable lever supported relative to the pedal bracket through the bracket pivot shaft can be rotationally displaced in response to interference with a vehicle body-side member, and the upper portion of the dropped pedal body is pushed in the rearward direction of the vehicle body by the push means integrally formed with the rotatable lever to rotationally displace the pedal body, for example, around the push-rod connection site, and largely move the foot pad formed at the lower end of the pedal body in the frontward direction of the vehicle body so as to effectively reduce a load to be imposed on driver's foot from the foot pad during the vehicle collision.

As a 23^{rd} aspect, in the support structure as described above, the push means is made up of an extension portion formed in the rotatable lever to extend in the frontward direction of the vehicle body relative to a pedal-pivot-shaft mounting site where the pedal pivot shaft is mounted to the pedal bracket.

In the support structure described above, in a simplified mechanism, the rotatable lever supported relative to the pedal bracket through the bracket pivot shaft can be rotationally displaced in response to interference with a vehicle body-side member, and the upper portion of the dropped pedal body is pushed in the rearward direction of the vehicle body by the push means integrally formed with the rotatable lever to rotationally displace the pedal body, for example, around the push-rod connection site, and largely move the foot pad formed at the lower end of the pedal body in the frontward direction of the vehicle body.

As a 24^{th} aspect, in the support structure as described in the 23^{rd} aspect, the push means is adapted, during the vehicle collision, to bring a frontward end of the extension portion into contact with the upper portion of the pedal body after an elapse of a given time from initiation of the dropping of the pedal pivot shaft, so as to push the upper portion of the pedal body in the rearward direction of the vehicle body.

In the support structure described above, the frontward end of the extension portion is brought into contact with the upper portion of the pedal body after an elapse of a given time from initiation of the dropping of the pedal pivot shaft. This makes it possible to reliably move the upper portion of the pedal body in the rearward direction of the vehicle body after completion of the dropping of the pedal pivot shaft and reliably move the foot pad in the frontward direction of the vehicle body so as to effectively reduce a load to be imposed on driver's foot during a vehicle collision. Further, in the normal state, the forward end of the extension portion can be disposed at a position spaced apart from the pedal body by a given distance, to avoid an undesirable situation where the extension portion pushes the pedal body due to disturbances, such as vibrations of the vehicle body, even during normal vehicle running, so as to constantly maintaining a stable supported state of the pedal body.

As a 25^{th} aspect, in the support structure as described in the 24^{th} aspect, the frontward end of the extension portion is formed to have a lateral width greater than that of a contact portion of the pedal body to be subjected to contact with the extension portion. The extension portion includes leading means for leading the contact portion of the pedal body to an approximately lateral center of the frontward end of the extension portion when the extension portion is brought into contact with the pedal body.

In the support structure as described above, the frontward end of the extension portion is formed to have a lateral width greater than that of the contact portion of the pedal body. Thus, the frontward end of the extension portion can be brought into contact with the pedal body to avoid an undesirable situation where the extension portion cannot be brought into contact with the pedal body (non-contact therebetween), for example, due to a large lateral displacement of the pedal body released from the restraint state relative to the pedal bracket in response to the dropping of the pedal pivot shaft, so as to reliably move the upper portion of the pedal body in the rearward direction of the vehicle body. In addition, the leading means for leading the contact portion of the pedal body to an approximately lateral center of the frontward end of the extension portion can effectively avoid an undesirable situation where a posture of the pedal body is largely displaced obliquely in the lateral direction during contact with the extension portion and thereby the pedal body gets stuck with the pedal bracket.

In the support structure as a 26^{th} aspect, the leading means is made up of a notch formed in the frontward end of the extension portion to have a reverse taper shape in top plan view.

In the support structure as described above, the pedal body can be reliably led to an approximately lateral center of the frontward end of the extension portion along the notch having a reverse taper shape in top plan view

As a 27^{th} aspect, in the support structure set forth in the 24^{th} aspect, the pedal body has a frontward surface serving as a contact portion to be subjected to contact with a frontward end of the extension portion. The contact portion has a lateral width greater than that of the frontward end of the extension portion, the pedal body including pedal-side leading means for leading the frontward end of the extension portion to an approximately lateral center of the contact portion of the pedal body when the extension portion is brought into contact with the pedal body.

In the support structure as described above, the frontward end of the extension portion can be reliably brought into contact with the contact portion of the pedal body, and the upper portion of the pedal body can be reliably moved in the rearward direction of the vehicle body in a stable posture.

As a 28^{th} aspect, in the support structure as described in the 27^{th} aspect, the pedal-side leading means is made up of a depression formed in the contact portion of the pedal body to have a reverse taper shape in section.

In the support structure as described above, the frontward end of the extension portion can be moved along an inner surface of the depression having a reverse taper shape in section pedal body in such a manner as to be reliably led to an approximately lateral center of the frontward end of the contact portion of the pedal body.

As a 29^{th} aspect, in the support structure as described in the 24^{th} aspect, the extension portion includes cushioning means for cushioning an impact force to be applied to the pedal body when the extension portion is brought into contact with the pedal body.

In the support structure as described above, the cushioning means makes it possible to prevent the upper portion of the pedal body from being excessively spaced apart from the extension portion and rapidly moved in the rearward direction of the vehicle body due to an excessively increased impact force at the contact, so as to effectively avoid occurrence of an unstable behavior of the pedal body. Thus, in the event of a vehicle collision, the upper portion of the pedal body can be stably moved in the rearward direction of the vehicle body according to the rotational displacement of the extension portion while allowing the upper portion of the pedal body to be pushed by the extension portion.

As a 30^{th} aspect, in the support structure as described in the 29^{th} aspect, the cushioning means is made up of an opening formed in the extension portion.

In the support structure as described above, an impact force to be imposed on the pedal body when the extension portion is brought into contact with the pedal body can be reduced in a simple structure.

As a 31^{st} aspect, in the support structure set forth in the 24^{th} aspect, the pedal body includes pedal-side cushioning means for cushioning an impact force to be applied thereto from aid extension portion when the extension portion is brought into contact with the pedal body.

In the support structure as described above, the pedal-side cushioning means can effectively reduce an impact force to be applied to the pedal body when the extension portion is brought into contact with the pedal body.

As a 32^{nd} aspect, in the support structure set forth in the second aspect of the present invention, the rotatable lever includes a releasing push zone adapted, during the vehicle collision, to push the pedal pivot shaft according to the rotational displacement of the rotatable lever so as to release the supported state of the pedal pivot shaft relative to the pedal-pivot-shaft support zone of the pedal bracket, and a moving push zone adapted, after the release of the supported state, to push the pedal pivot shaft or an upper portion of the pedal body so as to move the pedal pivot shaft in the rearward direction of the vehicle body. A distance between the lever pivot shaft supporting the rotatable lever and a position of the moving push zone in the rotatable lever is set at a value greater than a distance between the lever pivot shaft and a position of the releasing push zone in the rotatable lever.

In the support structure as described above, the rotatable lever is provided with the releasing push zone for pushing the pedal pivot shaft to release the supported state of the pedal pivot shaft, and the moving push zone for pushing the pedal pivot shaft relapsed from the supported state or the upper portion of the pedal body to move the pedal pivot shaft in the rearward direction of the vehicle body. Further, the distance between the lever pivot shaft supporting the rotatable lever and a position of the moving push zone in the rotatable lever is set at a value greater than a distance between the lever pivot shaft and a position of the releasing push zone in the rotatable lever. Thus, the supported state of the pedal pivot shaft can be readily released, and the pedal pivot shaft released from the supported state can be largely moved in the rearward direction of the vehicle body to effectively reduce a load to be imposed on driver's foot.

As a 33^{rd} aspect, the support structure set forth in the 32^{nd} aspect further includes guide means for guiding the pedal pivot shaft released from the supported state relative to the pedal-pivot-shaft support zone, in the rearward direction of the vehicle body.

In the support structure as described above, the guide means can stably move the pedal pivot shaft released from the supported state, in the rearward direction of the vehicle body, and reliably move the foot pad in the frontward direction of the vehicle body to effectively reduce a load to be imposed on driver's foot.

As a 34^{th} aspect, in the support structure set forth in the 33^{rd} aspect, the guide means comprises a guide groove formed in a lateral wall of the pedal bracket to have a curved shape extending downward toward the rearward direction of the vehicle body, and adapted to guide the pedal pivot shaft therealong.

In the support structure as described above, the pedal pivot shaft released from the supported state can be smoothly moved in the rearward direction of the vehicle body in a simplified mechanism.

As a 35^{th} aspect, in the support structure set forth in the 34^{th} aspect, the guide groove is formed to be spaced apart from the lever pivot shaft by a distance which gradually increases toward the rearward direction of the vehicle body, and the rotatable lever is adapted to push the pedal pivot shaft by the moving push zone in such a manner as to be moved along the guide groove and slidingly displaced in a direction away from the lever pivot shaft and in the rearward direction of the vehicle body.

In the support structure as described above, along the guide groove formed to be spaced apart from the lever pivot shaft by a distance which gradually increases toward the rearward direction of the vehicle body, the pedal pivot shaft can be moved in the rearward direction of the vehicle body while being pushed and gradually slidingly displaced in a direction away from the lever pivot shaft. Thus, the pedal pivot shaft can be moved in the rearward direction of the vehicle body largely and stably while continuously changing a lever ratio of the rotatable lever.

As a 36^{th} aspect, in the support structure set forth in the 32^{nd} aspect, the rotatable lever is formed with a holding slit for holding the pedal pivot shaft released from the supported state, and adapted to rotationally displace the pedal pivot shaft while holding the pedal pivot shaft within the holding slit, so as to move the pedal pivot shaft in the rearward direction of the vehicle body.

In the support structure as described above, the pedal pivot shaft released from the supported state relative to the pedal-pivot-shaft support zone can be stably moved in the rearward direction of the vehicle body without providing the guide means to the pedal bracket.

As a 37^{th} aspect, in the support structure set forth in the 32^{nd} aspect, the rotatable lever is adapted, after an elapse of a given time from the release of the supported state of the pedal pivot shaft, to push the upper portion of the pedal body by the moving push zone so as to move the pedal pivot shaft in the rearward direction of the vehicle body.

In the support structure as described above, after an elapse of a given time from the release of the supported state of the pedal pivot shaft, the upper portion of the pedal body is pushed by the moving push zone located at the position away from the lever pivot shaft 17 by a distance greater than that of the releasing push zone A. This makes it possible to intermittently change a lever ratio of the rotatable lever for pushing the pedal pivot shaft, and correspondingly largely move the pedal pivot shaft in the rearward direction of the vehicle body. Further, the moving push zone can push the upper portion of the pedal body at a position located farther from the lever pivot shaft. Thus the lever ratio of the rotatable lever can be changed in a wider range to largely move the pedal pivot shaft in the rearward direction of the vehicle body within a shorter period of time.

As a 38^{th} aspect, in the support structure set forth in the 22^{nd} aspect of the present invention, the pedal body has a push-rod mounting site which mounts thereon a push rod for driving a brake booster and serves as a pivot point of the pedal body when the supported state of the pedal pivot shaft is release. The push-rod mounting site is located below a pedal-pivot-shaft mounting site where the pedal pivot shaft is mounted to the pedal bracket. The pedal bracket is provided with an interference segment adapted to come into interference with a rearward surface of the pedal body when the pedal pivot shaft is moved in the rearward direction of the vehicle body, the interference segment being located at a position between the pedal-pivot-shaft mounting site and the push-rod mounting site.

In the support structure as described above, in addition to the rotatable lever for releasing the supported state of the pedal pivot shaft and moving the pedal pivot shaft released from the supported state during a vehicle collision, the interference segment adapted to come into interference with the rearward surface of the pedal body when the pedal pivot shaft is moved in the rearward direction of the vehicle body is arranged at the position between the push-rod mounting site and the pedal-pivot-shaft mounting site. Thus, a position of a pivot point about which the pedal body is to be swingingly displaced according to the rearward movement of the pedal pivot shaft during a vehicle collision can be changed between an initial stage (for releasing the supported state of the pedal pivot shaft) and a last stage of the vehicle collision, and correspondingly the foot pad formed at the lower end of the pedal body can be largely moved in the frontward direction of the vehicle body within a short time of period.

As a 39^{th} aspect, the present invention provides a support structure for a control pedal which is pivoted relative to a dash panel and adapted to be swingingly operated in frontward and rearward directions of a vehicle body. This support structure comprises a pedal bracket fixed to the dash panel to extend in the rearward direction of the vehicle body, and a pedal body swingably supported relative to the pedal bracket through a pedal pivot shaft mounted to the pedal bracket to extend in a lateral direction of the vehicle body. In the support structure the pedal bracket includes a pedal-pivot-shaft mount hole zone for mounting thereon the pedal pivot shaft, and a pedal-pivot-shaft support zone adapted to support the pedal pivot shaft from therebelow, the pedal-pivot-shaft support zone including a protruding portion located on at least either one of frontward and rearward sides of a lower peripheral edge of the pedal-pivot-shaft mount hole zone, and the support structure includes dropping means adapted, during a vehicle collision, to deform the pedal-pivot-shaft support zone so as to allow the pedal pivot shaft to be dropped below the pedal-pivot-shaft mount hole zone. The support structure is designed such that, during the vehicle collision, the pedal body is disengaged from the pedal bracket just after the pedal pivot shaft is dropped downward from the pedal-pivot-shaft mount hole zone of the pedal bracket.

According to the above support structure, during normal vehicle running, i.e., in a normal state, the pedal body can be stably supported in a simplified mechanism. Further, in the event of a vehicle collision, the pedal pivot shaft is pushed downward by the dropping means to produce a deformation of the protrusion portion constituting the pedal-pivot-shaft support zone and other movements so as to disengage the pedal body from the pedal bracket just after the pedal pivot shaft is dropped below the pedal-pivot-shaft mount hole zone, to release a restraint state of the pedal body relative to the pedal bracket. Thus, even if a vehicle collision occurs in a state when a foot of a driver is placed on a foot pad formed at a lower end of the pedal body, the support structure can advantageously prevent an undesirable situation where a load is excessively imposed on the driver's foot due to a rearward movement of the foot pad in conjunction with the pedal body, in an effective manner.

As a 40^{th} aspect of the present invention, the present invention provides a support structure for a control pedal which is pivoted relative to a dash panel and adapted to be swingingly operated in frontward and rearward directions of a vehicle body. This support structure comprises a pedal bracket fixed to the dash panel to extend in the rearward direction of the vehicle body, and a pedal body swingably supported relative to the pedal bracket through a pedal pivot shaft mounted to the pedal bracket to extend in a lateral direction of the vehicle body. In the support structure, the pedal bracket is formed with a pedal-pivot-shaft mount hole zone for mounting thereon the pedal pivot shaft, and a pedal-pivot-shaft support zone adapted to support the pedal pivot shaft from therebelow. The pedal-pivot-shaft support zone includes a protruding portion located on at least either one of frontward and rearward sides of a lower peripheral edge of the pedal-pivot-shaft mount hole zone. The support structure includes dropping means adapted, during a vehicle collision, to deform the pedal-pivot-shaft support zone so as to allow the pedal pivot shaft to be dropped below the pedal-pivot-shaft mount hole zone. The dropping means includes a rotatable lever swingably supported relative to the pedal bracket through a lever pivot shaft mounted to the pedal bracket to extend in the lateral direction of the vehicle body. The rotatable lever is adapted, during the vehicle collision, to be brought into interference with a vehicle body-side member and thereby rotationally displaced about the lever pivot shaft so as to push the pedal pivot shaft downward.

According to the above support structure, during normal vehicle running, i.e., in a normal state, the pedal body can be stably supported in a simplified mechanism. Further, in the event of a vehicle collision, the pedal pivot shaft is pushed downward by the rotatable lever adapted to be rotationally displaced about the lever pivot shaft. Thus, the pedal pivot shaft can be effectively disengaged from the pedal-pivot-shaft mount hole zone in a simplified mechanism. In addition, even if a vehicle collision occurs in a state when a foot of a driver is placed on a foot pad formed at a lower end of the pedal body, the support structure can advantageously prevent an undesirable situation where a load is excessively imposed on the driver's foot due to a rearward movement of the foot pad in conjunction with the pedal body, in an effective manner.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A support structure for a control pedal which is pivoted relative to a dash panel (1) and adapted to be swingingly operated in frontward and rearward directions of a vehicle body, comprising:
a pedal bracket (3) fixed to said dash panel (1) to extend in the rearward direction of the vehicle body; and
a pedal body (2) swingably supported relative to said pedal bracket (3) through a pedal pivot shaft (13) mounted to said pedal bracket (3) to extend in a lateral direction of the vehicle body,
wherein:
said pedal bracket (3) includes a pedal-pivot-shaft mount hole zone (14) for mounting thereon said pedal pivot shaft (13), and a pedal-pivot-shaft support zone (20) located below said pedal-pivot-shaft mount hole zone (14) and adapted to support said pedal pivot shaft (13) from therebelow; and
said support structure includes dropping means (5, 33) adapted, during a vehicle collision, to deform said pedal-pivot-shaft support zone (20) so as to allow said pedal pivot shaft (13) to be dropped below said pedal-pivot-shaft mount hole zone (14).

2. The support structure as defined in claim 1, which includes a rotatable lever (5) swingably supported relative to said pedal bracket (3) through a lever pivot shaft (17) mounted to said pedal bracket (3) to extend in the lateral direction of the vehicle body, said rotatable lever being adapted, during the vehicle collision, to be brought into interference with a vehicle body-side member and thereby rotationally displaced about said lever pivot shaft so as to push said pedal pivot shaft downward, wherein said dropping means is made up of said rotatable lever (5) and said vehicle body-side member.

3. The support structure as defined in claim 1 or claim 2, wherein said pedal-pivot-shaft support zone comprises a protruding portion (20) protruding from one side toward the other side of a lower peripheral edge of said pedal-pivot-shaft mount hole zone relative to an axis of said pedal pivot shaft.

4. The support structure as defined in claim 3, wherein said protruding portion (20) constituting said pedal-pivot-shaft support zone (20) is formed to protrude from a frontward side toward a rearward side of said pedal-pivot-shaft mount hole zone (14).

5. The support structure as defined in claim 4, wherein said protruding portion (20) constituting said pedal-pivot-shaft support zone has a base end formed with a cutout (16) for facilitating a plastic deformation of said protruding portion (20).

6. The support structure as defined in claim 5, which includes a deformation suppression segment (30) adapted to be disengageably inserted into said cutout (16) formed in the base end of said protruding portion supporting said pedal pivot shaft, so as to suppress a plastic deformation of said protruding portion.

7. The support structure as defined in claim 6, further comprising a rotatable lever (5) swingably supported relative to said pedal bracket (3) through a lever pivot shaft (17) mounted to said pedal bracket (3) to extend in the lateral direction of the vehicle body, said rotatable lever being adapted, during the vehicle collision, to be brought into interference with a vehicle body-side member and thereby rotationally displaced about said lever pivot shaft so as to push said pedal pivot shaft downward and wherein said deformation suppression segment (30) adapted to be disengageably inserted into said cutout is provided on said rotatable lever.

8. The support structure as defined in claim 7, which is designed such that, during the vehicle collision, said deformation suppression segment (30) of said rotatable lever (5) is disengaged from said cutout (16) before said pedal pivot shaft is pushed downward by said rotatable lever.

9. The support structure as defined in claim 1 or claim 2, wherein said pedal-pivot-shaft support zone (20) comprises a protruding portion located on at least either one of frontward and rearward sides of a lower peripheral edge of said pedal-pivot-shaft mount hole zone (14).

10. The support structure as defined in any one of claims 1 to 9, which is designed such that, during the vehicle collision, said pedal body (2) is disengaged from said pedal bracket (3) just after said pedal pivot shaft (13) is dropped downward from said pedal-pivot-shaft mount hole zone (14) of said pedal bracket (3).

11. The support structure as defined in claim 1, wherein:
said pedal bracket (3) has a guide zone (15) located in a layout region of said pedal-pivot-shaft support zone (20) and adapted to guide said pedal pivot shaft (13) downward; and
said pedal pivot shaft (13) includes a fastener segment adapted to be brought into contact with a region of said pedal-pivot-shaft support zone (20) located above said guide zone (15), in the lateral direction, so as to allow said pedal pivot shaft to be fastened to said pedal bracket.

12. The support structure as defined in claim 11, wherein:
said pedal-pivot-shaft support zone (20) includes a pair of pedal-pivot-shaft support portions formed on right and left sides of said pedal bracket to support laterally opposite ends of said pedal pivot shaft, respectively; and
said fastener segment includes two fastener elements (22, 23) each provided in a corresponding one of the laterally opposite ends of said pedal pivot shaft and adapted to be brought into press contact with a corresponding one of said pair of pedal-pivot-shaft support portions, in a laterally opposite direction, so as to allow the laterally opposite ends of said pedal pivot shaft to be fastened to said pedal bracket.

13. The support structure as defined in claim 1, which includes a lateral-displacement restriction segment (11) adapted, during the vehicle collision, to restrict a lateral displacement of said pedal pivot shaft (13) dropped downward from said pedal-pivot-shaft support zone (20) of said pedal bracket (3), at a given value or less.

14. The support structure as defined in claim 13, wherein said pedal bracket (3) includes a vertical plate (9) formed with said pedal-pivot-shaft support zone, a horizontal plate (10) extending laterally outward from a lower edge of said vertical plate (9), and an outer plate (11) extending downward from an outer edge of said horizontal plate (10), wherein said lateral-displacement restriction segment (11) is adapted to restrict the lateral displacement of said pedal pivot shaft (13) includes said outer plate.

15. The support structure as defined in claim 1, which includes a lateral-displacement restriction segment (12) adapted, during the vehicle collision, to restrict a lateral displacement of said pedal pivot shaft dropped from said pedal-pivot-shaft support zone (20) of said pedal bracket (3), in such a manner that an allowable range of said lateral displacement is gradually narrowed as said dropped pedal pivot shaft is moved downward.

16. The support structure as defined in claim 11, wherein said pedal bracket (3) is formed with an opening zone for allowing said fastener segment (22, 23) of said pedal pivot shaft (13) dropped downward from said pedal-pivot-shaft support zone (20) of said pedal bracket (2) to pass therethrough, wherein said support structure includes an interference restriction segment (38) for restricting the fastener segment (22, 23) of said pedal pivot shaft (13) from interfering with a periphery of the opening zone of said pedal bracket (3).

17. The support structure as defined in claim 1, further comprising a rotatable lever (5) swingably supported relative to said pedal bracket (3) through a lever pivot shaft (17) mounted to said pedal bracket (3) to extend in the lateral direction of the vehicle body, said rotatable lever being adapted, during the vehicle collision, to be brought into interference with a vehicle body-side member and thereby rotationally displaced about said lever pivot shaft so as to push said pedal pivot shaft downward and
wherein:
said pedal-pivot-shaft support zone (20) of said pedal bracket (3) is adapted to support said pedal pivot shaft (13) in a normal state; and
said pedal bracket (3) is formed with a dropping facilitation zone (15a) adapted, during the vehicle collision, to facilitate the downward dropping of said pedal pivot shaft (13) according to the rotational displacement of said rotatable lever (5),
wherein said pedal-pivot-shaft support zone (20) is formed to be in contact with said pedal pivot shaft (13) over an angular range of about ninety degrees as measured at least downward from a line of force applied to said pedal bracket (3) from said pedal pivot shaft (13) in response to a pedal pressing operation in the normal state.

18. The support structure as defined in claim 17, wherein said dropping facilitation zone (15a) is formed along a turning direction of said pedal pivot shaft (13) pushed by said rotatable lever (5) during the vehicle collision.

19. The support structure as defined in claim 18, wherein said dropping facilitation zone (15a) comprises a groove.

20. The support structure as defined in claim 18, wherein said rotatable lever (5) is adapted, during the vehicle collision, to push said pedal pivot shaft (13) obliquely downward in the frontward direction of the vehicle body.

21. The support structure as defined in claim 17, wherein:
said pedal body (2) has a push-rod connection site which connects to a push rod (35) for driving a brake booster in the normal state and serves as a pivot point of said pedal body after the dropping of said pedal pivot shaft during the vehicle collision, said push-rod connection site being located below a pedal-pivot-shaft mounting site where said pedal pivot shaft is mounted to said pedal bracket; and
said rotatable lever (5) is adapted, during the vehicle collision, to push said pedal pivot shaft (13) in a direction approximately parallel to a line connecting said push-rod connection site and said pedal-pivot-shaft mounting site, so as to allow said pedal pivot shaft to be dropped from said pedal-pivot-shaft support zone (20).

22. The support structure as defined in claim 1, further comprising a rotatable lever (5) swingably supported relative to said pedal bracket (3) through a lever pivot shaft (17) mounted to said pedal bracket (3) to extend in the lateral direction of the vehicle body, said rotatable lever (5) being adapted, during the vehicle collision, to be brought into interference with a vehicle body-side member and thereby rotationally displaced about said lever pivot shaft so as to push said pedal pivot shaft downward and
wherein said rotatable lever (5) is integrally provided with push means (28a) adapted, after the dropping of said pedal pivot shaft during the vehicle collision, to push an upper portion of said pedal body in the rearward direction of the vehicle body.

23. The support structure as defined in claim 22, wherein said push means (28a) is made up of an extension portion formed in said rotatable lever (5) to extend in the frontward direction of the vehicle body relative to a pedal-pivot-shaft mounting site (20) where said pedal pivot shaft (13) is mounted to said pedal bracket (3).

24. The support structure as defined in claim 23, wherein said push means is adapted, during the vehicle collision, to bring a frontward end of said extension portion into contact with the upper portion of said pedal body after an elapse of a given time from initiation of the dropping of said pedal pivot shaft, so as to push the upper portion of said pedal body in the rearward direction of the vehicle body.

25. The support structure as defined in claim 24, wherein the frontward end of said extension portion is formed to have a lateral width greater than that of a contact portion of said pedal body to be subjected to contact with said extension portion, wherein said extension portion includes leading means for leading the contact portion of said pedal body to an approximately lateral center of the frontward end of said extension portion when said extension portion is brought into contact with said pedal body.

26. The support structure as defined in claim 25, wherein said leading means is made up of a notch (31) formed in the frontward end of said extension portion (28a) to have a reverse taper shape in top plan view.

27. The support structure as defined in claim 24, wherein said pedal body (2) has a frontward surface formed with a contact portion to be subjected to contact with a frontward end of said extension portion, said contact portion having a lateral width greater than that of the frontward end of said extension portion, said pedal body including pedal-side leading means for leading the frontward end of said extension portion to an approximately lateral center of the contact portion of said pedal body when said extension portion is brought into contact with said pedal body.

28. The support structure as defined in claim 27, wherein said pedal-side leading means is made up of a depression formed in the contact portion of said pedal body to have a reverse taper shape in section.

29. The support structure as defined in claim 24, wherein said extension portion includes cushioning means for cushioning an impact force to be applied to said pedal body when said extension portion is brought into contact with said pedal body.

30. The support structure as defined in claim 29, wherein said cushioning means is made up of an opening (28b) formed in said extension portion.

31. The support structure as defined in claim 24, wherein said pedal body includes pedal-side cushioning means for cushioning an impact force to be applied thereto from aid extension portion when said extension portion is brought into contact with said pedal body.

32. The support structure as defined in claim 2, wherein said rotatable lever includes:
a releasing push zone (A) adapted, during the vehicle collision, to push said pedal pivot shaft according to the rotational displacement of said rotatable lever so as to release the supported state of said pedal pivot shaft relative to the pedal-pivot-shaft support zone of said pedal bracket; and
a moving push zone (B) adapted, after the release of said supported state, to push said pedal pivot shaft or an upper portion of said pedal body so as to move said pedal pivot shaft in the rearward direction of the vehicle body,
wherein a distance between said lever pivot shaft supporting said rotatable lever and a position of said moving push zone in said rotatable lever is set at a value greater than a distance between said lever pivot shaft and a position of said releasing push zone in said rotatable lever.

33. The support structure as defined in claim 32, further including guide means (41) for guiding said pedal pivot shaft released from the supported state relative to said pedal-pivot-shaft support zone, in the rearward direction of the vehicle body.

34. The support structure as defined in claim 33, wherein said guide means comprises a guide groove (41) formed in a lateral wall of said pedal bracket to have a curved shape extending downward toward the rearward direction of the vehicle body, and adapted to guide said pedal pivot shaft therealong.

35. The support structure as defined in claim 34, wherein:
said guide groove (41) is formed to be spaced apart from said lever pivot shaft by a distance which gradually increases toward the rearward direction of the vehicle body; and
said rotatable lever (5) is adapted to push said pedal pivot shaft (13) by said moving push zone in such a manner as to be moved along said guide groove and slidingly displaced in a direction away from said lever pivot shaft and in the rearward direction of the vehicle body.

36. The support structure as defined in claim 32, wherein said rotatable lever (5) is formed with a holding slit for holding said pedal pivot shaft (13) released from said supported state, and adapted to rotationally displace said pedal pivot shaft while holding said pedal pivot shaft within said holding slit, so as to move said pedal pivot shaft in the rearward direction of the vehicle body.

37. The support structure as defined in claim 32, wherein said rotatable lever (5) is adapted, after an elapse of a given time from the release of the supported state of said pedal pivot shaft (13), to push the upper portion of said pedal body by said moving push zone so as to move said pedal pivot shaft in the rearward direction of the vehicle body.

38. The support structure as defined in claim 22, wherein:
said pedal body (2) has a push-rod mounting site which mounts thereon a push rod (35) for driving a brake booster and serves as a pivot point of said pedal body (2) when the supported state of said pedal pivot shaft is released, said push-rod mounting site being located below a pedal-pivot-shaft mounting site where said pedal pivot shaft is mounted to said pedal bracket; and
said pedal bracket is provided with an interference segment (65) adapted to come into interference with a rearward surface of said pedal body when said pedal pivot shaft is moved in the rearward direction of the vehicle body, said interference segment being located at a position between said pedal-pivot-shaft mounting site and said push-rod mounting site.

## Patentansprüche

1. Tragstruktur für ein Steuerpedal, die im Verhältnis zu einem Querblech (1) drehbar angelenkt und dafür ausgelegt ist, in Vorwärts- und Rückwärtsrichtung einer Fahrzeugkarosserie schwenkbar betätigt zu werden, welche umfasst:
einen an dem Querblech (1) so befestigten Pedalhalter (3), dass er sich in der Rückwärtsrichtung der Fahrzeugkarosserie erstreckt; und
einen Pedalkörper (2), der im Verhältnis zu dem Pedalhalter (3) durch eine Schwenkwelle (13) schwenkbar gelagert ist, die an dem Pedalhalter (3) so befestigt ist, dass sie sich in eine Seitenrichtung der Fahrzeugkarosserie erstreckt,
wobei:
der Pedalhalter (3) eine Pedalschwenkwellen-Befestigungsöffnungszone (14) zum Befestigen der Pedalschwenkwelle (13) daran sowie eine Pedalschwenkwellen-Lagerungszone (20) umfasst, die unter der Pedalschwenkwellen-Befestigungsöffnungszone (14) angeordnet und dafür ausgelegt ist, die Pedalschwenkwelle (3) von unten zu lagern; und
die Tragstruktur ein dafür ausgelegtes Absenkmittel (5, 33) umfasst, während einer Fahrzeugkollision die Pedalschwenkwellen-Lagerungszone (20) zu verformen, um ein Absenken der Pedalschwenkwelle (13) unter die Pedalschwenkwellen-Befestigungsöffnungszone (14) zuzulassen.

2. Tragstruktur nach Anspruch 1, welche einen drehbaren Hebel (5) umfasst, der im Verhältnis zum Pedalhalter (3) durch eine so an dem Pedalhalter (3) befestigte Hebelschwenkwelle (17), dass sie sich in der Seitenrichtung der Fahrzeugkarosserie erstreckt, schwenkbar gelagert ist, wobei der drehbare Hebel so ausgelegt ist, dass er während der Fahrzeugkollision in Eingriff mit einem fahrzeugkarosserieseitigen Element gebracht und dadurch um die Hebelschwenkwelle drehend verlagert wird, um die Pedalschwenkwelle nach unten zu schieben, wobei das Absenkmittel aus dem drehbaren Hebel (5) und dem fahrzeugkarosserieseitigen Element besteht.

3. Tragstruktur nach Anspruch 1 oder 2, **dadurch gekennzeichnet, dass** die Pedalschwenkwellen-Lagerungszone einen hervorstehenden Abschnitt (20) umfasst, der im Verhältnis zu einer Achse der Pedalschwenkwelle von einer Seite hin zur anderen Seite einer unteren umlaufenden Kante der Pedalschwenkwellen-Befestigungsöffnungszone hervorsteht.

4. Tragstruktur nach Anspruch 3, **dadurch gekennzeichnet, dass** der hervorstehende Abschnitt (20), der die Pedalschwenkwellen-Lagerungszone (20) bildet, so ausgebildet ist, dass er von einer vorderen Seite zu einer hinteren Seite der Pedalschwenkwellen-Befestigungsöffnungszone (14) hervorsteht.

5. Tragstruktur nach Anspruch 4, **dadurch gekennzeichnet, dass** der hervorstehende Abschnitt (20) der die Pedalschwenkwellen-Lagerungszone bildet, ein Bodenende aufweist, das mit einem Ausschnitt (16) zum Erleichtern einer plastischen Verformung des hervorstehenden Abschnitts (20) ausgebildet ist.

6. Tragstruktur nach Anspruch 5, welche ein Verformungsunterdrückungssegment (30) umfasst, das dafür ausgelegt ist, in den in dem Bodenende des hervorstehenden Abschnitts, der die Pedalschwenkwelle lagert, ausgebildeten Ausschnitt (16) ausrückbar eingeführt zu werden, um eine plastische Verformung des hervorstehenden Abschnitts zu unterdrücken.

7. Tragstruktur nach Anspruch 6, welche weiterhin einen drehbaren Hebel (5) umfasst, der im Verhältnis zum Pedalhalter (3) durch eine so an dem Pedalhalter (3) befestigte Hebelschwenkwelle (17), dass sie sich in der Seitenrichtung der Fahrzeugkarosserie erstreckt, schwenkbar gelagert ist, wobei der drehbare Hebel so ausgelegt ist, dass er während der Fahrzeugkollision in Eingriff mit einem fahrzeugkarosserieseitigen Element gebracht und dadurch um die Hebelschwenkwelle drehend verlagert wird, um die Pedalschwenkwelle nach unten zu schieben, und wobei das Verformungsunterdrückungssegment (30), das dafür ausgelegt ist, ausrückbar in den Ausschnitt eingeführt zu werden, an dem drehbaren Hebel vorgesehen ist.

8. Tragstruktur nach Anspruch 7, die so gestaltet ist, dass während der Fahrzeugkollision das Verformungsunterdrückungssegment (30) des drehbaren Hebels (5) aus dem Ausschnitt (16) ausgerückt wird, bevor die Pedalschwenkwelle durch den drehbaren Hebel nach unten geschoben wird.

9. Tragstruktur nach Anspruch 1 oder 2, **dadurch gekennzeichnet, dass** die Pedalschwenkwellen-Lagerungszone (20) einen hervorstehenden Abschnitt umfasst, der an mindestens einer von vorderer und hinterer Seite einer unteren umlaufenden Kante der Pedalschwenkwellen-Befestigungsöffnungszone (14) angeordnet ist.

10. Tragstruktur nach einem der Ansprüche 1 bis 9, die so gestaltet ist, dass während der Fahrzeugkollision der Pedalkörper (2) von dem Pedalhalter (3) ausgerückt wird, kurz nachdem die Pedalschwenkwelle (13) von der Pedalschwenkwellen-Befestigungsöffnungszone (14) des Pedalhalters (3) nach unten abgesenkt wurde.

11. Tragstruktur nach Anspruch 1, **dadurch gekennzeichnet, dass**:
der Pedalhalter (3) eine Lenkzone (15) aufweist, die in einem Anordnungsbereich der Pedalschwenkwellen-Lagerungszone (20) angeordnet und dafür ausgelegt ist, die Pedalschwenkwelle (13) nach unten zu lenken; und
die Pedalschwenkwelle (13) ein dafür ausgelegtes Befestigungssegment umfasst, mit einem Bereich der Pedalschwenkwellen-Lagerungszone (20), der sich über der Lenkzone (15) befindet, in der Seitenrichtung in Kontakt gebracht zu werden, um ein Befestigen der Pedalschwenkwelle an dem Pedalhalter zuzulassen.

12. Tragstruktur nach Anspruch 11, **dadurch gekennzeichnet, dass**:
die Pedalschwenkwellen-Lagerungszone (20) ein Paar von Pedalschwenkwellen-Lagerungsabschnitten umfasst, die auf der rechten und linken Seite des Pedalhalters ausgebildet sind, um seitlich gegenüberliegende Enden der Pedalschwenkwelle jeweils zu lagern; und
das Befestigungssegment zwei Befestigungselemente (22, 23) umfasst, die jeweils in einem entsprechenden der sich seitlich gegenüberliegenden Enden der Pedalschwenkwelle vorgesehen und dafür ausgelegt sind, mit einem entsprechenden des Paars von Pedalschwenkwellen-Lagerungsabschnitten in einer seitlichen Gegenrichtung in Presskontakt gebracht zu werden, um ein Befestigen der seitlich gegenüberliegenden Enden der Pedalschwenkwelle an dem Pedalhalter zuzulassen.

13. Tragstruktur nach Anspruch 1, welche ein Segment (11) zur Beschränkung seitlicher Verlagerung umfasst, das so ausgelegt ist, dass es während der Fahrzeugkollision eine seitliche Verlagerung der von der Pedalschwenkwellen-Lagerungszone (20) des Pedalhalters (3) abgesenkten Pedalschwenkwelle (13) bei einem vorgegebenen Wert oder weniger beschränkt.

14. Tragstruktur nach Anspruch 13, **dadurch gekennzeichnet, dass** der Pedalhalter (3) eine vertikale Platte (9), die mit der Pedalschwenkwellen-Lagerungszone ausgebildet ist, eine horizontale Platte (10), die sich von einer unteren Kante der vertikalen Platte (9) seitlich nach außen erstreckt, und eine äußere Platte (11), die sich von einer äußeren Kante der horizontalen Platte (10) nach unten erstreckt, umfasst, wobei das Segment (11) zur Beschränkung seitlicher Verlagerung, das dafür ausgelegt ist, die seitliche Verlagerung der Pedalschwenkwelle (13) zu beschränken, die äußere Platte umfasst.

15. Tragstruktur nach Anspruch 1, welche ein Segment (12) zur Beschränkung seitlicher Verlagerung umfasst, das so ausgelegt ist, dass es während der Fahrzeugkollision eine seitliche Verlagerung der von der Pedalschwenkwellen-Lagerungszone (20) des Pedalhalters (3) abgesenkten Pedalschwenkwelle so beschränkt, dass ein zulässiger Bereich der seitlichen Verlagerung allmählich verringert wird, wenn die abgesenkte Pedalschwenkwelle abwärts bewegt wird.

16. Tragstruktur nach Anspruch 11, **dadurch gekennzeichnet, dass** der Pedalhalter (3) mit einer Öffnungszone zum Durchtretenlassen des Befestigungssegments (22, 23) der von der Pedalschwenkwellen-Lagerungszone (20) des Pedalhalters (2) abgesenkten Pedalschwenkwelle (13) ausgebildet ist, wobei die Tragstruktur ein Segment (38) zur Beschränkung des Eingriffs zum Beschränken eines Eingriffs des Befestigungssegments (22, 23) der Pedalschwenkwelle (13) mit einem Umfang der Öffnungszone des Pedalhalters (3) umfasst.

17. Tragstruktur nach Anspruch 1, welche weiterhin einen drehbaren Hebel (5) umfasst, der im Verhältnis zum Pedalhalter (3) durch eine so an dem Pedalhalter (3) befestigte Hebelschwenkwelle (17), dass sie sich in der Seitenrichtung der Fahrzeugkarosserie erstreckt, schwenkbar gelagert ist,
wobei der drehbare Hebel so ausgelegt ist, dass er während der Fahrzeugkollision in Eingriff mit einem fahrzeugkarosserieseitigen Element gebracht und dadurch um die Hebelschwenkwelle drehend verlagert wird, um die Pedalschwenkwelle nach unten zu schieben, und wobei:
die Pedalschwenkwellen-Lagerungszone (20) des Pedalhalters (3) dafür ausgelegt ist, die Pedalschwenkwelle (13) in einem normalen Zustand zu lagern; und
der Pedalhalter (3) mit einer Absenkerleichterungszone (15a) ausgebildet ist, die dafür ausgelegt ist, während der Fahrzeugkollision das Absenken der Pedalschwenkwelle (13) nach unten gemäß der drehenden Verlagerung des drehbaren Hebels (5) zu erleichtern,
wobei die Pedalschwenkwellen-Lagerungszone (20) so ausgebildet ist, dass sie mit der Pedalschwenkwelle (13), gemessen zumindest abwärts von einer an dem Pedalhalter (3) von der Pedalschwenkwelle (13) als Reaktion auf einen Pedaldrückbetrieb im normalem Zustand ausgeübten Kraftlinie, über einen Winkelbereich von etwa neunzig Grad in Kontakt steht.

18. Tragstruktur nach Anspruch 17, **dadurch gekennzeichnet, dass** die Absenkerleichterungszone (15a) entlang einer Drehrichtung der Pedalschwenkwelle (13), die von dem drehbaren Hebel (5) während der Fahrzeugkollision geschoben wird, ausgebildet ist.

19. Tragstruktur nach Anspruch 18, **dadurch gekennzeichnet, dass** die Absenkerleichterungszone (15a) eine Nut umfasst.

20. Tragstruktur nach Anspruch 18, **dadurch gekennzeichnet, dass** der drehbare Hebel (5) dafür ausgelegt ist, während der Fahrzeugkollision die Pedalschwenkwelle (13) schräg nach unten in die Vorwärtsrichtung der Fahrzeugkarosserie zu schieben.

21. Tragstruktur nach Anspruch 17, **dadurch gekennzeichnet, dass**:
der Pedalkörper (2) eine Stößelstangen-Verbindungsstelle aufweist, die eine Stößelstange (35) zum Antreiben eines Bremsverstärkers im normalen Zustand verbindet und als Schwenkpunkt des Pedalkörpers nach dem Absenken der Pedalschwenkwelle während der Fahrzeugkollision dient, wobei die Stößelstangen-Verbindungsstelle unter einer Pedalschwenkwellen-Befestigungsstelle angeordnet ist, an der die Pedalschwenkwelle an dem Pedalhalter befestigt ist; und
der drehbare Hebel (5) dafür ausgelegt ist, während der Fahrzeugkollision die Pedalschwenkwelle (13) in eine Richtung in etwa parallel zu einer Linie zu schieben, die die Stößelstangen-Verbindungsstelle und die Pedalschwenkwellen-Befestigungsstelle verbindet, um ein Absenken der Pedalschwenkwelle von der Pedalschwenkwellen-Lagerungszone (20) zuzulassen.

22. Tragstruktur nach Anspruch 1, welche weiterhin einen drehbaren Hebel (5) umfasst, der im Verhältnis zum Pedalhalter (3) durch eine so an dem Pedalhalter (3) befestigte Hebelschwenkwelle (17), dass sie sich in der Seitenrichtung der Fahrzeugkarosserie erstreckt, schwenkbar gelagert ist, wobei der drehbare Hebel (5) so ausgelegt ist, dass er während der Fahrzeugkollision in Eingriff mit einem fahrzeugkarosserieseitigen Element gebracht und dadurch um die Hebelschwenkwelle drehend verlagert wird, um die Pedalschwenkwelle nach unten zu schieben, und
wobei der drehbare Hebel (5) integral mit einem Schiebemittel (28a) versehen ist, das dafür ausgelegt ist, nach dem Absenken der Pedalschwenkwelle während der Fahrzeugkollision einen oberen Abschnitt des Pedalkörpers in die Rückwärtsrichtung der Fahrzeugkarosserie zu schieben.

23. Tragstruktur nach Anspruch 22, **dadurch gekennzeichnet, dass** das Schiebemittel (28a) aus einem Erweiterungsabschnitt besteht, der in dem drehbaren Hebel (5) so ausgebildet ist, dass er sich im Verhältnis zu einer Pedalschwenkwellen-Befestigungsstelle (20), an der die Pedalschwenkwelle (13) an dem Pedalhalter (3) befestigt ist, in die Vorwärtsrichtung der Fahrzeugkarosserie erstreckt.

24. Tragstruktur nach Anspruch 23, **dadurch gekennzeichnet, dass** das Schiebemittel dafür ausgelegt ist, während der Fahrzeugkollision nach Verstreichen einer vorgegebenen Zeit ab Auslösen des Absenkens der Pedalschwenkwelle ein vorderes Ende des Erweiterungsabschnitts mit dem oberen Abschnitt des Pedalkörpers in Kontakt zu bringen, um den oberen Abschnitt des Pedalkörpers in die Rückwärtsrichtung der Fahrzeugkarosserie zu schieben.

25. Tragstruktur nach Anspruch 24, **dadurch gekennzeichnet, dass** das vordere Ende des Erweiterungsabschnitts so ausgebildet ist, dass es eine seitliche Breite aufweist, die größer als die eines Kontaktabschnitts des Pedalkörpers ist, der einem Kontakt mit dem Erweiterungsabschnitt unterzogen wird, wobei der Erweiterungsabschnitt Führungsmittel zum Führen des Kontaktabschnitts des Pedalkörpers zu einer in etwa seitlichen Mitte des vorderen Endes des Erweiterungsabschnitts umfasst, wenn der Erweiterungsabschnitt in Kontakt mit dem Pedalkörper gebracht wird.

26. Tragstruktur nach Anspruch 25, **dadurch gekennzeichnet, dass** das Führungsmittel aus einer Kerbe (31) besteht, die in dem vorderen Ende des Erweiterungsabschnitts (28a) so ausgebildet ist, dass sie in einer Draufsicht von oben eine umgekehrt zulaufende Form aufweist.

27. Tragstruktur nach Anspruch 24, **dadurch gekennzeichnet, dass** der Pedalkörper (2) eine vordere Fläche aufweist, die mit einem Kontaktabschnitt ausgebildet ist, der einem Kontakt mit einem vorderen Ende des Erweiterungsabschnitts unterzogen werden soll, wobei der Kontaktabschnitt eine seitliche Breite aufweist, die größer als die des vorderen Endes des Erweiterungsabschnitts ist, wobei der Pedalkörper ein pedalseitiges Führungsmittel zum Führen des vorderen Endes des Erweiterungsabschnitts zu einer in etwa seitlichen Mitte des Kontaktabschnitts des Pedalkörpers umfasst, wenn der Erweiterungsabschnitt in Kontakt mit dem Pedalkörper gebracht wird.

28. Tragstruktur nach Anspruch 27, **dadurch gekennzeichnet, dass** das pedalseitige Führungsmittel aus einer Vertiefung besteht, die in dem Kontaktabschnitt des Pedalkörpers so ausgebildet ist, dass sie im Schnitt eine umgekehrt zulaufende Form aufweist.

29. Tragstruktur nach Anspruch 24, **dadurch gekennzeichnet, dass** der Erweiterungsabschnitt Dämpfungsmittel zum Dämpfen einer Aufprallkraft umfasst, die auf den Pedalkörper auszuüben ist, wenn der Erweiterungsabschnitt in Kontakt mit dem Pedalkörper gebracht wird.

30. Tragstruktur nach Anspruch 29, **dadurch gekennzeichnet, dass** das Dämpfungsmittel aus einer Öffnung (28b) besteht, die in dem Erweiterungsabschnitt ausgebildet ist.

31. Tragstruktur nach Anspruch 24, **dadurch gekennzeichnet, dass** der Pedalkörper pedalseitige Dämpfungsmittel zum Dämpfen einer Aufprallkraft umfasst, die von dem Erweiterungsabschnitt darauf auszuüben ist, wenn der Erweiterungsabschnitt in Kontakt mit dem Pedalkörper gebracht wird.

32. Tragstruktur nach Anspruch 2, **dadurch gekennzeichnet, dass** der drehbare Hebel umfasst:
eine freigebende Schiebezone (A), die dafür ausgelegt ist, während der Fahrzeugkollision die Pedalschwenkwelle gemäß der drehenden Verlagerung des drehbaren Hebels zu schieben, um den gelagerten Zustand der Pedalschwenkwelle im Verhältnis zur Pedalschwenkwellen-Lagerungszone des Pedalhalters freizugeben; und
eine bewegende Schiebezone (B), die dafür ausgelegt ist, nach dem Freigeben des gelagerten Zustands die Pedalschwenkwelle oder einen oberen Abschnitt des Pedalkörpers zu schieben, um die Pedalschwenkwelle in die Rückwärtsrichtung der Fahrzeugkarosserie zu bewegen,
wobei ein Abstand zwischen der Hebelschwenkwelle, die den drehbaren Hebel lagert, und einer Position der bewegenden Schiebezone in dem drehbaren Hebel auf einen Wert gesetzt ist, der größer als ein Abstand zwischen der Hebelschwenkwelle und einer Position der freigebenden Schiebezone in dem drehbaren Hebel ist.

33. Tragstruktur nach Anspruch 32, welche weiterhin Lenkmittel (41) zum Lenken der von dem gelagerten Zustand freigegebenen Pedalschwenkwelle im Verhältnis zur Pedalschwenkwellen-Lagerungszone in die Rückwärtsrichtung der Fahrzeugkarosserie umfasst.

34. Tragstruktur nach Anspruch 33, **dadurch gekennzeichnet, dass** das Lenkmittel einen Lenknut (41) umfasst, die in einer Seitenwand des Pedalhalters so ausgebildet ist, dass sie eine sich nach unten hin zur Rückwärtsrichtung der Fahrzeugkarosserie erstreckende gebogene Form aufweist, und dafür ausgelegt ist, die Pedalschwenkwelle entlang derselben zu lenken.

35. Tragstruktur nach Anspruch 34, **dadurch gekennzeichnet, dass**:
die Lenknut (41) so ausgebildet ist, dass sie von der Hebelschwenkwelle um einen Abstand beabstandet ist, der hin zur Rückwärtsrichtung der Fahrzeugkarosserie allmählich zunimmt; und
der drehbare Hebel (5) dafür ausgelegt ist, die Pedalschwenkwelle (13) durch die bewegende Schiebezone so zu bewegen, dass sie entlang der Lenknut bewegt und in eine Richtung weg von der Hebelschwenkwelle und in die Rückwärtsrichtung der Fahrzeugkarosserie gleitend verlagert wird.

36. Tragstruktur nach Anspruch 32, **dadurch gekennzeichnet, dass** der drehbare Hebel (5) mit einem Halteschlitz zum Halten der von dem gelagerten Zustand freigegebenen Pedalschwenkwelle (13) ausgebildet ist und dafür ausgelegt ist, die Pedalschwenkwelle drehend zu verlagern, während die Pedalschwenkwelle in dem Halteschlitz gehalten wird, um die Pedalschwenkwelle in die Rückwärtsrichtung der Fahrzeugkarosserie zu bewegen.

37. Tragstruktur nach Anspruch 32, **dadurch gekennzeichnet, dass** der drehbare Hebel (5) dafür ausgelegt ist, nach Verstreichen einer vorgegebenen Zeit ab der Freigabe des gelagerten Zustands der Pedalschwenkwelle (13) den oberen Abschnitt des Pedalkörpers durch die bewegende Schiebezone zu schieben, um die Pedalschwenkwelle in die Rückwärtsrichtung der Fahrzeugkarosserie zu bewegen.

38. Tragstruktur nach Anspruch 22, **dadurch gekennzeichnet, dass**:
der Pedalkörper (2) eine Stößelstangen-Befestigungsstelle aufweist, die eine Stößelstange (35) zum Antreiben eines Bremsverstärkers daran befestigt und als Schwenkpunkt des Pedalkörpers (2), dient, wenn der gelagerte Zustand der Pedalschwenkwelle freigegeben wird, wobei die Stößelstangen-Befestigungsstelle unter einer Pedalschwenkwellen-Befestigungsstelle angeordnet ist, an der die Pedalschwenkwelle an dem Pedalhalter befestigt ist; und
der Pedalhalter mit einem Eingriffsegment (65) versehen ist, das dafür ausgelegt ist, mit einer hinteren Fläche des Pedalkörpers in Eingriff zu kommen, wenn die Pedalschwenkwelle in die Rückwärtsrichtung der Fahrzeugkarosserie bewegt wird, wobei das Eingriffsegment an einer Position zwischen der Pedalschwenkwellen-Befestigungsstelle und der Stößelstangen-Befestigungsstelle angeordnet ist.

## Revendications

1. Une structure de support destinée à une pédale de manoeuvre qui est pivotée par rapport à un tableau de bord (1) et adaptée à être actionnée de manière pivotante dans les directions avant et arrière d'une caisse de véhicule, comprenant :
un bras de pédale (3) fixé audit tableau de bord (1) pour s'étendre dans la direction arrière de la caisse de véhicule ; et
un corps de pédale (2) soutenu de manière oscillante par rapport audit bras de pédale (3) par un axe de pédale (13) monté sur ledit bras de pédale (3) pour s'étendre dans une direction latérale de la caisse de véhicule,
dans laquelle :
ledit bras de pédale (3) comprend une zone à trou de montage d'axe de pédale (14) destinée au montage sur celui-ci dudit axe de pédale (13), et une zone d'appui d'axe de pédale (20) placée au-dessous de ladite zone à trou de montage d'axe de pédale (14) et adaptée à soutenir ledit axe de pédale (13) à partir du dessous de celui-ci ; et
ladite structure de support comprend des moyens de rabattement (5, 33) adaptés, pendant une collision du véhicule, à déformer ladite zone d'appui d'axe de pédale (20) afin de permettre audit axe de pédale (13) d'être rabattu au-dessous de ladite zone à trou de montage d'axe de pédale (14).

2. La structure de support selon la définition de la revendication 1, qui comprend un levier rotatif (5) soutenu de manière oscillante par rapport audit bras de pédale (3) par un boulon d'articulation du levier (17) monté sur ledit bras de pédale (3) pour s'étendre dans la direction latérale de la caisse de véhicule, ledit levier rotatif étant adapté, pendant la collision du véhicule, à être mis en interférence avec un élément latéral de caisse du véhicule et déplacé alors de manière rotative autour dudit boulon d'articulation du levier afin de pousser ledit axe de pédale vers le bas, dans laquelle ledit moyen de rabattement est constitué dudit levier rotatif (5) et dudit élément latéral de caisse du véhicule.

3. La structure de support selon la définition de la revendication 1 ou de la revendication 2, dans laquelle ladite zone d'appui d'axe de pédale comprend une partie en saillie (20) faisant saillie d'un côté vers l'autre côté d'un angle périphérique plus bas de ladite zone à trou de montage d'axe de pédale par rapport à un axe dudit axe de pédale.

4. La structure de support selon la définition de la revendication 3, dans laquelle ladite partie en saillie (20) constituant ladite zone d'appui d'axe de pédale (20) est agencée pour faire saillie d'un côté avant vers un côté arrière de ladite zone à trou de montage d'axe de pédale (14).

5. La structure de support selon la définition de la revendication 4, dans laquelle ladite partie en saillie (20) constituant ladite zone d'appui d'axe de pédale a une extrémité de base agencée avec une découpure (16) pour faciliter une déformation plastique de ladite partie en saillie (20).

6. La structure de support selon la définition de la revendication 5, qui comprend un segment de suppression de la déformation (30) adapté à être inséré de manière désengrenable dans ladite découpure (16) agencée dans l'extrémité de base de ladite partie en saillie soutenant ledit axe de pédale, afin de supprimer une déformation plastique de ladite partie en saillie.

7. La structure de support selon la définition de la revendication 6, comprenant par ailleurs un levier rotatif (5) soutenu de manière oscillante par rapport audit bras de pédale (3) par un boulon d'articulation du levier (17) monté sur ledit bras de pédale (3) pour s'étendre dans la direction latérale de la caisse de véhicule, ledit levier rotatif étant adapté, pendant la collision du véhicule, à être mis en interférence avec un élément latéral de caisse du véhicule tout en étant déplacé de manière rotative autour dudit boulon d'articulation du levier afin de pousser ledit axe de pédale vers le bas et dans lequel ledit segment de suppression de la déformation (30) adapté à être inséré de manière désengrenable dans ladite découpure est présent sur ledit levier rotatif.

8. La structure de support selon la définition de la revendication 7, qui est conçue de manière à ce que, pendant la collision du véhicule, ledit segment de suppression de la déformation (30) dudit levier rotatif (5) est désengrené de ladite découpure (16) avant que ledit axe de pédale soit poussé vers le bas par ledit levier rotatif.

9. La structure de support selon la définition de la revendication 1 ou de la revendication 2, dans laquelle ladite zone d'appui d'axe de pédale (20) comprend une partie en saillie située sur au moins un des côtés avant et arrière d'un angle périphérique inférieur de ladite zone à trou de montage d'axe de pédale (14).

10. La structure de support selon la définition d'une quelconque des revendications 1 à 9, qui est conçue de manière à ce que, pendant la collision du véhicule, ledit corps de pédale (2) est désengrené dudit bras de pédale (3) juste après que ledit axe de pédale (13) soit rabattu vers le bas à partir de ladite zone à trou de montage d'axe de pédale (14) dudit bras de pédale (3).

11. La structure de support selon la définition de la revendication 1, dans laquelle:
ledit bras de pédale (3) a une zone de guidage (15) située dans une région d'espacement de ladite zone d'appui d'axe de pédale (20) et adaptée pour guider ledit axe de pédale (13) vers le bas ;
et
ledit axe de pédale (13) comprend un segment de fixation adapté à être mis en contact avec une région de ladite zone d'appui d'axe de pédale (20) située au-dessus de ladite zone de guidage (15), dans la direction latérale, afin de permettre audit axe de pédale d'être fixé audit bras de pédale.

12. La structure de support selon la définition de la revendication 11, dans laquelle:
ladite zone d'appui d'axe de pédale (20) comprend une paire d'éléments d'appui d'axe de pédale agencés sur les côtés droite et gauche dudit bras de pédale pour soutenir respectivement les extrémités opposées latéralement dudit axe de pédale ; et
ledit segment de fixation comprend deux éléments de fixation (22, 23) chacun présent dans une des extrémités opposées latéralement correspondante dudit axe de pédale et adaptés afin d'être mise en contact de pression avec une correspondante de ladite paire d'éléments d'appui d'axe de pédale, dans une direction opposée latéralement, afin de permettre aux extrémités opposées latéralement dudit axe de pédale d'être fixé audit bras de pédale.

13. La structure de support selon la définition de la revendication 1, qui comprend un segment de limitation du déplacement latéral (11) adapté, pendant la collision du véhicule, à limiter un déplacement latéral dudit axe de pédale (13) rabattu vers le bas à partir de ladite zone d'appui d'axe de pédale (20) dudit bras de pédale (3), à une valeur donnée ou inférieure.

14. La structure de support selon la définition de la revendication 13, dans laquelle ledit bras de pédale (3) comprend une plaque verticale (9) agencée avec ladite zone d'appui d'axe de pédale, une plaque horizontale (10) s'étendant latéralement vers l'extérieur à partir d'un angle plus bas de ladite plaque verticale (9), et une plaque extérieure (11) s'étendant vers le bas à partir d'un angle extérieur de ladite plaque horizontale (10), dans laquelle ledit segment de limitation du déplacement latéral (11) adapté à limiter le déplacement latéral dudit axe de pédale (13) comprend ladite plaque extérieure.

15. La structure de support selon la définition de la revendication 1, qui comprend un segment de limitation du déplacement latéral (12) adapté, pendant la collision du véhicule, à limiter un déplacement latéral dudit axe de pédale rabattu à partir de ladite zone d'appui d'axe de pédale (20) dudit bras de pédale (3), de telle manière qu'une marge admissible dudit déplacement latéral est limitée progressivement lorsque ledit axe de pédale rabattu est déplacé vers le bas.

16. La structure de support selon la définition de la revendication 11, dans laquelle ledit bras de pédale (3) est agencé avec une zone d'ouverture pour permettre audit segment de fixation (22, 23) dudit axe de pédale (13) rabattu vers le bas à partir de ladite zone d'appui d'axe de pédale (20) dudit bras de pédale (2) de passer à travers celle-ci, dans laquelle ladite structure de support comprend un segment de limitation d'interférence (38) pour empêcher le segment de fixation (22, 23) dudit axe de pédale (13) de faire interférence avec une périphérie de la zone d'ouverture dudit bras de pédale (3).

17. La structure de support selon la définition de la revendication 1, comprenant par ailleurs un levier rotatif (5) soutenu de manière oscillante par rapport audit bras de pédale (3) par un boulon d'articulation du levier (17) monté sur ledit bras de pédale (3) pour s'étendre dans la direction latérale de la caisse de véhicule, ledit levier rotatif étant adapté, pendant la collision du véhicule, à être mis en interférence avec un élément latéral de caisse du véhicule tout en étant déplacé de manière rotative autour dudit boulon d'articulation du levier afin de pousser ledit axe de pédale vers le bas et
ladite zone d'appui d'axe de pédale (20) dudit bras de pédale (3) est adapté à soutenir ledit axe de pédale (13) dans un état normal ; et
ledit bras de pédale (3) est agencé avec une zone de facilitation du rabattement (15a) adaptée, pendant la collision du véhicule, à faciliter le rabattement vers le bas dudit axe de pédale (13) selon le déplacement rotatif dudit levier rotatif (5),
dans laquelle ladite zone d'appui d'axe de pédale (20) est agencée pour être en contact avec ledit axe de pédale (13) sur une plage angulaire d'environ quatre-vingt dix degrés, mesurés au moins vers le bas à partir d'une ligne de force appliquée sur ledit bras de pédale (3) à partir dudit axe de pédale (13) en réponse à une opération de pression de la pédale à l'état normal.

18. La structure de support selon la définition de la revendication 17, dans laquelle ladite zone de facilitation du rabattement (15a) est agencée le long d'une direction de rotation dudit axe de pédale (13) poussée par ledit levier rotatif (5) pendant la collision du véhicule.

19. La structure de support selon la définition de la revendication 18, dans laquelle ladite zone de facilitation du rabattement (15a) comprend une rainure.

20. La structure de support selon la définition de la revendication 18, dans laquelle ledit levier rotatif (5) est adapté, pendant la collision du véhicule, à pousser ledit axe de pédale (13) obliquement vers le bas dans la direction avant de la caisse de véhicule.

21. La structure de support selon la définition de la revendication 17, dans laquelle:
ledit corps de pédale (2) a un emplacement de raccordement de poussoir de soupape qui se raccorde à un poussoir de soupape (35) pour conduire une assistance de freinage à l'état normal et sert de point de pivot dudit corps de pédale après le rabattement dudit axe de pédale pendant la collision du véhicule, ledit emplacement de raccordement de poussoir de soupape étant situé au-dessous d'un emplacement de montage d'axe de pédale où ledit axe de pédale est monté sur ledit bras de pédale; et
ledit levier rotatif (5) est adapté, pendant la collision du véhicule, à pousser ledit axe de pédale (13) dans une direction approximativement parallèle à une ligne reliant ledit emplacement de raccordement de poussoir de soupape et ledit emplacement de montage d'axe de pédale, afin de permettre audit axe de pédale d'être rabattu à partir de ladite zone d'appui d'axe de pédale (20).

22. La structure de support selon la définition de la revendication 1, comprenant par ailleurs un levier rotatif (5) soutenu de manière oscillante par rapport audit bras de pédale (3) par un boulon d'articulation du levier (17) monté sur ledit bras de pédale (3) pour s'étendre dans la direction latérale de la caisse de véhicule, ledit levier rotatif (5) étant adapté, pendant la collision du véhicule, à être mis en interférence avec un élément latéral de caisse du véhicule tout en étant déplacé de manière rotative autour dudit boulon d'articulation du levier afin de pousser ledit axe de pédale vers le bas et
dans laquelle ledit levier rotatif (5) est doté intégralement d'un moyen de poussée (28a) adapté, après le rabattement dudit axe de pédale pendant la collision du véhicule, à pousser une partie supérieure dudit corps de pédale dans la direction arrière de la caisse de véhicule.

23. La structure de support selon la définition de la revendication 22, dans laquelle ledit moyen de poussée (28a) est constitué d'une partie d'extension agencée dans ledit levier rotatif (5) pour s'étendre dans la direction avant de la caisse de véhicule par rapport à un emplacement de montage d'axe de pédale (20) où ledit axe de pédale (13) est monté sur ledit bras de pédale (3).

24. La structure de support selon la définition de la revendication 23, dans laquelle ledit moyen de poussée est adapté, pendant la collision du véhicule, à mettre une extrémité avant de ladite partie d'extension en contact avec la partie supérieure dudit corps de pédale après un lapse de temps donné à partir du lancement du rabattement dudit axe de pédale, afin de pousser la partie supérieure dudit corps de pédale dans la direction arrière de la caisse de véhicule.

25. La structure de support selon la définition de la revendication 24, dans laquelle l'extrémité avant de ladite partie d'extension est agencée pour avoir une largeur latérale supérieure à celle d'une partie de contact dudit corps de pédale à affecter au contact avec ladite partie d'extension, dans laquelle ladite partie d'extension comprenant un moyen de commande pour charger la partie de contact dudit corps de pédale vers un centre approximativement latéral de l'extrémité avant de ladite partie d'extension lorsque ladite partie d'extension est mise en contact avec ledit corps de pédale.

26. La structure de support selon la définition de la revendication 25, dans laquelle ledit moyen de commande est constitué d'un cran (31) agencé dans l'extrémité avant de ladite partie d'extension (28a) pour avoir une forme conique inversée dans la vue du plan supérieur.

27. La structure de support selon la définition de la revendication 24, dans laquelle ledit corps de pédale (2) a une surface avant agencée avec une partie de contact à affecter au contact avec une extrémité avant de ladite partie d'extension, ladite partie de contact ayant une largeur latérale plus grande que celle de l'extrémité avant de ladite partie d'extension, ledit corps de pédale comprenant un moyen de commande du côté de la pédale pour charger l'extrémité avant de ladite partie d'extension vers un centre approximativement latéral de la partie de contact dudit corps de pédale lorsque ladite partie d'extension est mise en contact avec ledit corps de pédale.

28. La structure de support selon la définition de la revendication 27, dans laquelle ledit moyen de commande du côté de la pédale est composé d'une dépression agencée dans la partie de contact dudit corps de pédale pour avoir une forme conique inversée dans la section.

29. La structure de support selon la définition de la revendication 24, dans laquelle ladite partie d'extension comprend un moyen d'amortissement pour amortir une force d'impact exercée sur ledit corps de pédale lorsque ladite partie d'extension est mise en contact avec ledit corps de pédale.

30. La structure de support selon la définition de la revendication 29, dans laquelle ledit moyen d'amortissement est constitué d'une ouverture (28b) agencée dans ladite partie d'extension.

31. La structure de support selon la définition de la revendication 24, dans laquelle ledit corps de pédale comprend un moyen d'amortissement du côté de la pédale pour amortir une force d'impact exercée sur celui-ci à partir de ladite partie d'extension lorsque ladite partie d'extension est mise en contact avec ledit corps de pédale.

32. La structure de support selon la définition de la revendication 2, dans laquelle ledit levier rotatif comprend :
une zone de poussée de relâchement (A) adaptée, pendant la collision du véhicule, à pousser ledit axe de pédale selon le déplacement rotatif dudit levier rotatif afin de relâcher l'état soutenu dudit axe de pédale par rapport à la zone d'appui d'axe de pédale dudit bras de pédale ; et
une zone de poussée de déplacement (B) adaptée, après le relâchement dudit état soutenu, à pousser ledit axe de pédale ou une partie supérieure dudit corps de pédale afin de déplacer ledit axe de pédale dans la direction arrière de la caisse de véhicule,
dans laquelle une distance entre ledit boulon d'articulation du levier soutenant ledit levier rotatif et une position de ladite zone de poussée de déplacement dans ledit levier rotatif est réglée à une valeur supérieure à une distance entre ledit boulon d'articulation du levier et une position de ladite zone de poussée de relâchement dans ledit levier rotatif.

33. La structure de support selon la définition de la revendication 32, comprenant par ailleurs un moyen de guidage (41) pour guider ledit axe de pédale relâché à partir de l'état soutenu par rapport à ladite zone d'appui d'axe de pédale, dans la direction arrière de la caisse de véhicule.

34. La structure de support selon la définition de la revendication 33, dans laquelle ledit moyen de guidage comprend une rainure de guidage (41) agencé dans une paroi latérale dudit bras de pédale pour avoir une forme incurvée vers le bas dans la direction arrière de la caisse de véhicule, et adapté à guider ledit axe de pédale le long de celle-ci.

35. La structure de support selon la définition de la revendication 34, dans laquelle :
ladite rainure de guidage (41) est agencée pour être espacé à l'écart dudit boulon d'articulation du levier par une distance qui augmente progressivement vers la direction arrière de la caisse de véhicule ; et
ledit levier rotatif (5) est adapté à pousser ledit axe de pédale (13) par ladite zone de poussée de déplacement de manière à être déplacé le long de ladite rainure de guidage et à être déplacé de manière coulissante dans une direction s'éloignant dudit boulon d'articulation du levier et dans la direction arrière de la caisse de véhicule.

36. La structure de support selon la définition de la revendication 32, dans laquelle ledit levier rotatif (5) est agencé avec une fente de maintien pour maintenir ledit axe de pédale (13) relâché de l'état soutenu, et adapté pour déplacer de manière rotative ledit axe de pédale tout en maintenant ledit axe de pédale à l'intérieur de la fente de maintien, afin de déplacer ledit axe de pédale dans la direction arrière de la caisse de véhicule.

37. La structure de support selon la définition de la revendication 32, dans laquelle ledit levier rotatif (5) est adapté, après un lapse de temps donné à partir du relâchement de l'état soutenu dudit axe de pédale (13), à pousser la partie supérieure dudit corps de pédale par ladite zone de poussée de déplacement afin de déplacer ledit axe de pédale dans la direction arrière de la caisse de véhicule.

38. La structure de support selon la définition de la revendication 22, dans laquelle ledit corps de pédale (2) a un emplacement de montage de poussoir de soupape qui monte sur celui-ci un poussoir de soupape (35) pour conduire une assistance de freinage et sert de point de pivot dudit corps de pédale (2) lorsque l'état retenu dudit axe de pédale est relâché, ledit emplacement de montage de poussoir de soupape étant situé au-dessous d'un emplacement de montage d'axe de pédale où ledit axe de pédale est monté sur ledit bras de pédale ; et
ledit bras de pédale est doté d'un segment d'interférence (65) adapté à venir en interférence avec une surface arrière dudit corps de pédale lorsque ledit axe de pédale est déplacé dans la direction arrière de la caisse de véhicule, ledit segment d'interférence étant placé à une position entre ledit emplacement de montage d'axe de pédale et ledit emplacement de montage de poussoir de soupape.
